# EUROPEAN PATENT APPLICATION

(11) **EP 3 038 428 A1**
(43) Date of publication of application: **29.06.2016**
(21) Application number: 13891932.9
(22) Date of filing: 19.08.2013
(51) Int. Cl.: H04W 88/04, H04W 40/22, H04W 92/18

(54) **MOBILE COMMUNICATION SYSTEM, COMMUNICATION METHOD IN MOBILE COMMUNICATION SYSTEM, AND TERMINAL APPARATUSES**

(71) Applicant: Fujitsu Ltd., Kawasaki-shi, Kanagawa 211-8588 (JP)
(72) Inventor: KAWASHIMA Shinichi, Kawasaki-shi Kanagawa 211-8588 (JP); MURAKAMI Norio, Kawasaki-shi Kanagawa 211-8588 (JP)
(74) Representative: Schultes, Stephan
(86) International application number: PCT/JP2013/072059
(87) International publication number: WO 2015/025348

(57) **Abstract**

A mobile communication system including: a base station apparatus; and a first and second terminal apparatuses configured to perform radio communication with the base station apparatus, wherein the first terminal apparatus includes: a first inter-terminal communication control unit configured to transmit and receive a data to and from the second terminal apparatus, and the second terminal apparatus includes: a memory; a second inter-terminal communication control unit configured to receive the data transmitted from the first terminal apparatus and store the data in the memory, and transmit a data transmitted from the base station apparatus to the first terminal apparatus; and a control unit configured to transmit to the base station apparatus the data transmitted from the first terminal apparatus and a data generated by the second terminal apparatus, and to receive the data transmitted from the base station apparatus and store in the memory.

## Description

### TECHNICAL FIELD

The embodiments discussed herein are related to a mobile communication system, communication method for the mobile communication system, and terminal apparatus.

### BACKGROUND ART

At present, a radio communication systems such as a mobile telephone system and a wireless LAN (Local Area Network) is widely in use. Also, in the field of radio communication, continuous discussion is being made on a next generation communication technology to further improve a communication speed and a communication capacity. For example, in the 3GPP (3rd Generation Partnership Project), which is a standardization association, the standardization of a communication specification called LTE (Long Term Evolution) and LTE-A (LTE-Advanced) which is based on the LTE is completed or under discussion.

Meanwhile, in the event of a wide area disaster such as a large-scale earthquake, a typhoon, a flood, etc., there is a case of simultaneous communication by each user using a terminal in order to notify the family of the safety of the user. In such a case, because communication is concentrated in a region crowded with people, such as the neighborhood of a station, congestion may occur. Also in such a case, the communication capacity of radio communication may be restricted by the restriction of communication.

In such a situation, it can be said that the occurrence of the restricted communication capacity and the congestion signifies that the communication holds on the basis of, for example, preconditions as described below.

Namely, the conditions are:
(1) An end-to-end communication path exists during communication.
(2) Retransmission and error correction based on feedback is possible.
(3) A performance environment is not exceedingly different between uplink communication and downlink communication.
(4) A packet loss in a communication path is a constant or smaller.
(5) In many cases, allowable communication performance is achieved by the selection of one communication path.

In the case of the wide area disaster etc., for example, by the communication concentration, an end-to-end communication path becomes inexistent or communication with feedback becomes difficult in radio communication between a base station and a terminal. As a result, the occurrence of the wide area disaster produces a situation in which the above-mentioned preconditions for communication are unable to hold.

Now, as techniques related to the radio communication in the event of a disaster etc., there are techniques as described below, for example.

Namely, there is a technique in which, in regard to a second terminal which is a connection destination of a first terminal of a connection source by ad hoc multi-hop communication, the second terminal selects a relay terminal on the basis of whether or not the second terminal includes connection destination information which is not retained in the first terminal, so that an ad hoc network communication path is automatically formed.

According to the above technique, it is said to be possible to provide a technique which enables making contact even in the case of emergency or when a public communication means such as mobile telephone is not available due to traffic congestion.

Also, there is a technique related to a mobile communication terminal in which a tuner for receiving radio broadcast etc. is activated based on information included in a control signal transmitted from a base station, and the occurrence of a disaster is detected by received emergency alert broadcast to activate a multi-hop communication function in response to the detection of the disaster occurrence to thereby enable communication.

According to the above technique, it is said to be possible to transmit and receive voice/data communication between with a specific opposite party in the event of the disaster without a special user operation, in a similar manner to communication through a mobile telephone network.

Further, there is a technique of a mobile communication terminal apparatus in which, based on a signal received from a radio base station or a relay station or another mobile communication terminal apparatus which performs relay control, the mobile communication terminal apparatus decides whether to execute operation as a relay station, and on deciding to execute relay control, to control to operate the self-apparatus as the relay station.

According to the above technique, it is said to be possible to perform data relay in an area in which communication quality is not secured.

Further, there is a technique related to a radio base station in which, in regard to an "RRC Connection Request" whose transmission source is a mobile station, the radio base station rejects at an ordinary time, whereas accepts in the event of a disaster, on the basis of restriction control.

According to the above technique, it is said to be possible to perform restriction to a relay node in consideration of an actual operational environment.

### CITATION LIST

### PATENT DOCUMENTS

Patent document 1: Japanese Laid-open Patent Publication No. 2007-288259.
Patent document 2: Japanese Laid-open Patent Publication No. 2006-319555.
Patent document 3: Japanese Laid-open Patent Publication No. 2009-231990.
Patent document 4: Japanese Laid-open Patent Publication No. 2011-4375.

### SUMMARY OF I NVENTI ON

### PROBLEMS TO BE SOLVED BY THE I NVENTI ON

However, in the technique of automatically forming the ad hoc network communication path on the basis of whether or not connection destination information which is not retained in the first terminal is included, it is configured to set the communication path by collecting in advance the connection destination information from each terminal.

As described above, in the event of a wide area disaster, there may be a case that communication is unable to hold due to the occurrence of congestion etc. I n such a case, the collection of connection destination information between terminals produces a more difficult situation to acquire disaster information and transportation information, because of the consumption of communication resources by the collection.

Accordingly, in the above-mentioned technique, the terminal is incapable of acquiring disaster information etc. when communication is unable to hold in the event of the disaster etc., which causes difficulty in mutually sharing the information.

Also, with regard to the technique of activating the tuner to activate the multi-hop communication function in response to the detection of the occurrence of the disaster, the terminal may in some cases be incapable of receiving a control signal from the base station in a situation when communication is unable to hold due to a wide area disaster etc. In such a case, by the above technique, it is not possible to activate the tuner and therefore not possible to detect the occurrence of the disaster. Moreover, in the technique of concern, no method is disclosed on how to deal with the sharing of information, including the disaster information and the transportation information, among terminals (or among people).

Also, with regard to the above-mentioned technique of controlling to operate as the relay station and the technique of accepting the "RRC Connection Request" in the event the disaster, no method is disclosed on how to deal with the sharing of the disaster information etc. in the event of the disaster.

Accordingly, it is an object in one aspect of the embodiment to provide a mobile communication system, communication method for the mobile communication system, and terminal apparatus possible to share information between terminal apparatuses.

### MEANS FOR SOLVI NG THE PROBLEMS

Accordingly to an aspect of the embodiments, a mobile communication system including: a base station apparatus; and a first and second terminal apparatuses configured to perform radio communication with the base station apparatus, wherein the first terminal apparatus includes: a first inter-terminal communication control unit configured to transmit and receive a data to and from the second terminal apparatus when the first terminal apparatus establishes radio connection with the second terminal apparatus without establishing radio connection with the base station apparatus, and the second terminal apparatus includes: a memory; a second inter-terminal communication control unit configured to receive the data transmitted from the first terminal apparatus and store the data in the memory, and transmit a data transmitted from the base station apparatus and stored in the memory to the first terminal apparatus, when the second terminal apparatus establishes radio connection with the first terminal apparatus; and a control unit configured to transmit to the base station apparatus the data transmitted from the first terminal apparatus and stored in the memory and a data generated by the second terminal apparatus, and to receive the data transmitted from the base station apparatus and store in the memory, when the second terminal apparatus establishes radio connection with the base station apparatus.

### ADVANTAGEOUS EFFECTS OF THE INVENTION

It is possible to provide a mobile communication system, communication method for the mobile communication system, and terminal apparatus possible to share information between terminal apparatuses.

### BRI EF DESCRI PTI ON OF DRAWINGS

FIG. 1 is a diagram illustrating a configuration example of a mobile communication system according to a first embodiment.
FIG. 2 is a diagram illustrating a configuration example of a mobile communication system.
FIG. 3 is a diagram illustrating an example of information transfer in uplink communication.
FIG. 4 is a sequence diagram illustrating an operation example of information transfer in uplink communication.
FIG. 5A is a sequence diagram illustrating an operation example in uplink communication, and FIG. 5B is a diagram illustrating an example of packet data.
FIG. 6A is a sequence diagram illustrating an operation example in uplink communication, and FIG. 6B is a diagram illustrating an example of packet data.
FIG. 7 is a diagram illustrating an example of information transfer in downlink communication.
FIG. 8A is a sequence diagram illustrating an operation example of information transfer in downlink communication, FIG. 8B is a diagram illustrating an example of storage information, and FIG. 8C is a diagram illustrating an example of packet data.
FIG. 9 is a diagram illustrating an example of information transfer in downlink communication.
FIG. 10 is a sequence diagram illustrating an operation example of information transfer in downlink communication.
FIG. 11 is a diagram illustrating a configuration example of a network system.
FIG. 12 is a diagram illustrating a configuration example of a terminal.
FIG. 13 is a diagram illustrating a configuration example of a base station.
FIG. 14 is a diagram illustrating a configuration example of an MME.
FIG. 15 is a diagram illustrating a configuration example of an SMSC.
FIG. 16 is a sequence diagram illustrating a transmission example of communication restriction information.
FIG. 17 is a sequence diagram illustrating an example of establishment processing of inter-terminal communication and inter-base station communication.
FIG. 18 is a sequence diagram illustrating an example of establishment processing of inter-terminal communication and inter-base station communication.
FIG. 19 is a flowchart illustrating an operation example of a terminal and a base station.
FIG. 20 is a flowchart illustrating an operation example of a terminal and a base station.
FIG. 21 is a flowchart illustrating an operation example of a terminal and a base station.
FIG. 22 is a diagram illustrating an example of state transition of a terminal.
FIG. 23A is a flowchart illustrating an operation example of a communication method, and FIG. 23B is a flowchart illustrating an example of a communication method.
FIG. 24 is a diagram illustrating an example of radio resource allocation.
FIG. 25 is a diagram illustrating an example of packet data.
FIG. 26 is a flowchart illustrating an operation example of a terminal.
FIG. 27 is a flowchart illustrating an operation example of an MME.
FIG. 28 is a flowchart illustrating an overall operation example on the network side.
FIG. 29 is a diagram illustrating a configuration example of a CNT.
FIG. 30 is a diagram illustrating configuration examples of an MME and an SMSC.

### DESCRI PTI ON OF EMBODIMENTS

Hereafter, the present embodiments will be described in detail by reference to the drawings.

### [First embodiment]

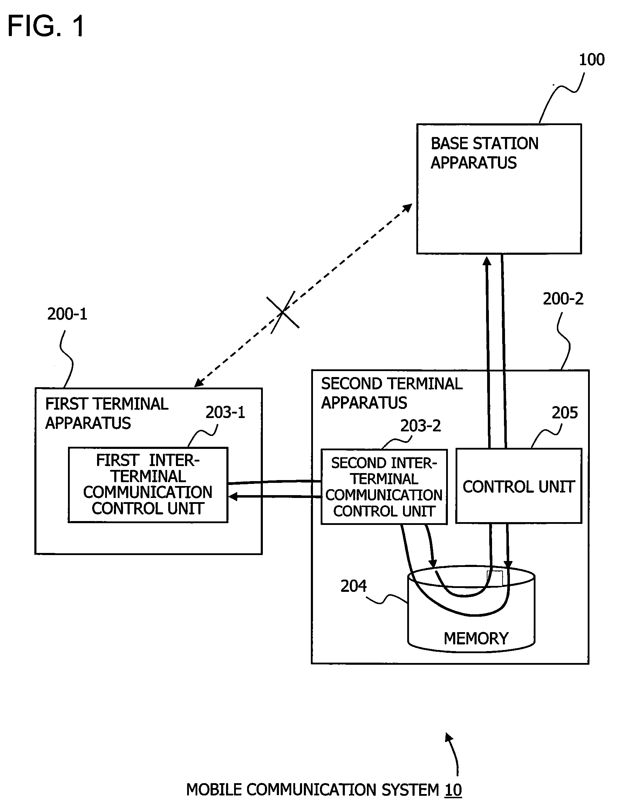

FIG. 1 is a diagram illustrating a configuration example of a mobile communication system 10 according to a first embodiment. The mobile communication system 1 includes a base station apparatus 100, a first terminal apparatus 200-1 and a second terminal apparatus 200-2.

The base station apparatus 100 and the first and second terminal apparatuses 200-1, 200-2 can perform radio communication within the communicable range of the base station apparatus 100, for example. The first and second terminal apparatuses 200-1, 200-2 can receive a variety of services from the base station apparatus 100 through the radio communication with the base station apparatus 100.

The first terminal apparatus 200-1 includes a first inter-terminal communication unit 203-1. The first inter-terminal communication unit 203-1 transmits and receives data between with the second terminal apparatus 200-2, when the establishment of a radio connection with the base station apparatus 100 is unsuccessful whereas when the establishment of a radio connection with the second terminal apparatus 200-2 is successfully made.

Further, the second terminal apparatus 200-2 includes a second inter-terminal communication unit 203-2, a memory 204 and a control unit 205.

On establishing the radio connection with the first terminal apparatus 200-1, the second inter-terminal communication unit 203-2 receives data transmitted from the first terminal apparatus 200-1 to store into the memory 204 and transmits data, which is transmitted from the base station 100 and stored into the memory 204, to the first terminal apparatus 200-1.

On establishing the radio connection with the base station apparatus 100, the control unit 205 transmits the data, which is transmitted from the first terminal apparatus 200-1 and stored into the memory 204, and data generated by the second terminal apparatus 200-2, to the base station apparatus 100, and also receives data transmitted from the base station apparatus 100 to store into the memory 204.

As such, in the present first embodiment, the first terminal apparatus 200-1, if radio connection with the base station apparatus 100 is unsuccessful, transmits data to the second terminal apparatus 200-2 using inter-terminal communication, so that the second terminal apparatus 200-2 stores the data concerned into the memory 204. Then, the second terminal apparatus 200-2, on successfully radio connected with the base station apparatus 100, transmits data received from the first terminal apparatus 200-1 and stored in the memory 204, to the base station apparatus 100.

This enables, for example, the first terminal apparatus 200-1, incapable of radio communication with the base station apparatus 100, to transmit data to the base station apparatus 100 with the help of the second terminal apparatus 200-2 which can radio communicate with the base station apparatus 100. Therefore, for example, a user using the first terminal apparatus 200-1 can transmit safety information etc. in the example of a disaster etc., and share information with a user using another terminal apparatus (or with another terminal apparatus).

Also, on receiving data from the base station apparatus 100, the second terminal apparatus 200-2 stores the data into the memory 204, and transmits the stored data to the first terminal apparatus 200-1, when inter-terminal communication with the first terminal apparatus 200-1 becomes possible.

Thus, for example, the first terminal apparatus 200-1, which is incapable of radio communication with the base station apparatus 100, can receive data transmitted from the base station apparatus 100, with the help of the second terminal apparatus 200-2. Accordingly, the first terminal apparatus 200-1 and the second terminal apparatus 200-2 can acquire identical information (for example, public information etc.) from the base station apparatus 200, so that the terminal apparatuses can share the information.

### [Second embodiment]

Next, a second embodiment will be described. I n the second embodiment, the description will be made in the following sequence.
< 1. Configuration example of mobile communication system>
< 2. Example of information transfer>
< 3. Configuration example of network>
<4. Configuration examples of terminal and base station>
< 5. Configuration examples of MME and SMSC>
< 6. Operation example>

### < 1. Configuration example of mobile communication system>

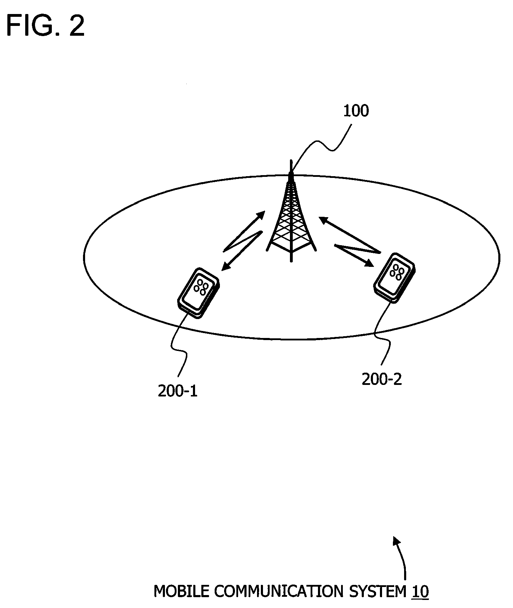

A configuration example of the mobile communication system will be described. FIG. 2 is a diagram illustrating a configuration example of the mobile communication system 10.

The mobile communication system 10 includes a base station apparatus (which may hereafter be referred to as a "base station") 100 and terminal apparatuses (which may hereafter be referred to as "terminals") 200-1, 200-2.

The base station 100 is a radio communication apparatus which performs radio communication with the terminals 200-1, 200-2. The base station 100 can perform bidirectional communication with the terminals 200-1, 200-2 in the communicable region of the self-station (which may be referred to as a "cell" or a "cell range", for example).

Namely, the bidirectional communication includes data transmission the base station 100 to the terminals 200-1, 200-2 (or downlink communication), and data transmission from the terminals 200-1, 200-2 to the base station 100 (or uplink communication). The base station 100 allocates each radio resource (for example, a time resource and a frequency resource) to the terminals 200-1, 200-2 by scheduling etc. The base station 100 transmits to each terminal 200-1, 200-2 the allocated radio resource, as a control signal. The base station 100 and the terminals 200-1, 200-2 perform downlink communication and uplink communication using the radio resource.

Incidentally, the base station 100 is connected further to an upper-level apparatus through a wired channel. A configuration example of a network including the upper-level apparatus etc. will be described later.

The terminals 200-1, 200-2 are movable radio communication apparatuses such as a feature phone and a smartphone. The terminals 200-1, 200-2 perform radio communication with the base station 100 to thereby receive a variety of services such as a speech communication service, video distribution and web page reading.

Now, when a disaster such as a heavy earthquake, a typhoon, etc. occurs, people may simultaneously communicate using the terminals 200-1, 200-2 in order to obtain disaster information, meteorological information, etc. and transmit safety information etc. In such a case, a rush of accesses may occur particularly to a place crowded with people like a station, which causes disabled radio communication by the terminals 200-1, 200-2, even if the place is located within the cell range of the base station 100.

In such a case, according to the present mobile communication system 10, the terminals 200-1, 200-2 can exchange information through the inter-terminal communication, and further, information can be transmitted to the base station 100 through the terminal 200-1 which can successfully be connected to the base station 100, so that can solve various problems in a deteriorated communication environment. Further, according to the present mobile communication system 10, the terminal 200-1 connected to the base station 100 receives information from the base station 100 and transmits the information to the terminal 200-2, in which connection to the base station 100 is not possible, through the inter-terminal communication, so that can solve various problems in the example of the deteriorated communication environment.

Thus, it becomes possible to share the disaster information etc. between the terminals 200-1, 200-2 (or people) even in the event of a disaster, for example. Also, safety information etc. can be transmitted through the terminal 200-1. In this case, no processing for information sharing is executed in the base station 100 etc., and therefore, information can be shared without applying a load to the network side.

In the present mobile communication system 10, the possibility of such information sharing and the necessity therefor are increased. For example, in the environment of a wide-area and large-scale disaster, there are prerequisites of:
(1) There is a similarity in information which people are seeking in a place crowded with a large number of people.
(2) The distance between the terminals 200-1, 200-2 (or between nodes) is a constant distance or smaller (or has high density) in the place crowded with a large number of people.
(3) Communication is difficult due to congestion etc.

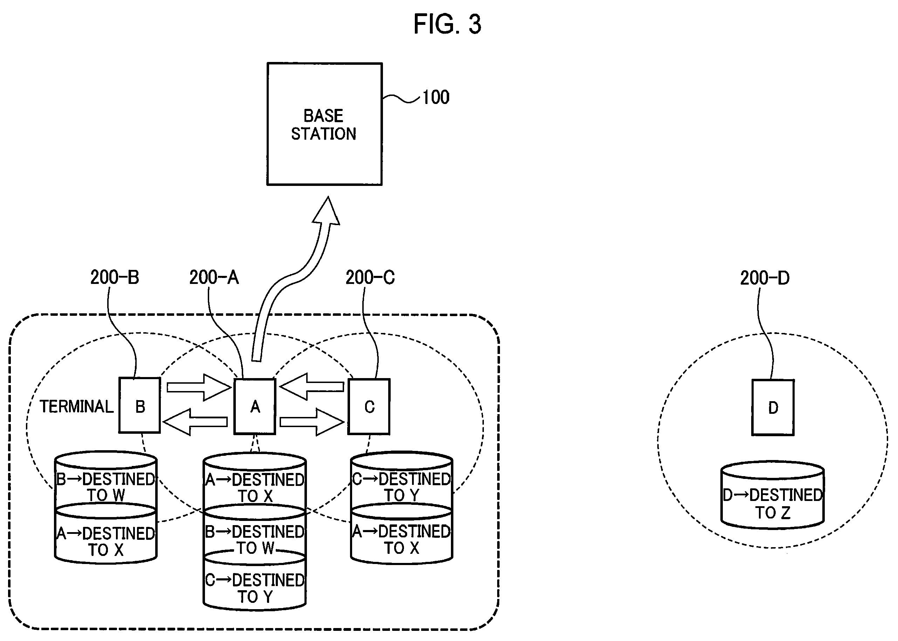

In the following, an example of making information sharing between terminals will be described according to FIG. 3 etc.

### < 2. Example of information transfer>

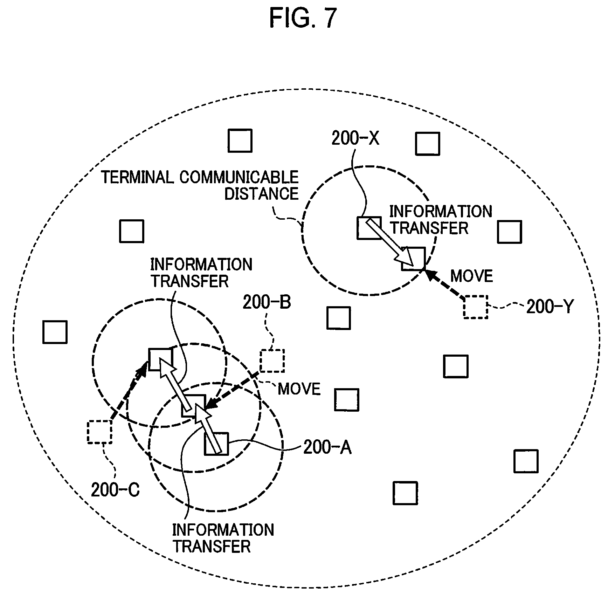

Next, by use of FIG. 3 through 10, a description will be given on how information is transferred (or transmitted) in the mobile communication system 10 in the event of a disaster. Among the figures, FIG. 3 through 6B illustrate examples of uplink communication, whereas FIG. 7 through 10 illustrate examples of downlink communication.

Here, such information transfer is started, for example, when communication restriction information transmitted from the base station 100 is received in the terminal 200. In the communication restriction information, there are included emergency information such as an earthquake early warning and a tsunami early warning, for example. In the examples of FIG. 3 through 10, the transmission and reception of the communication restriction information is omitted. The detail of the communication restriction information will be described later.

### < 2.1 Example of uplink communication>

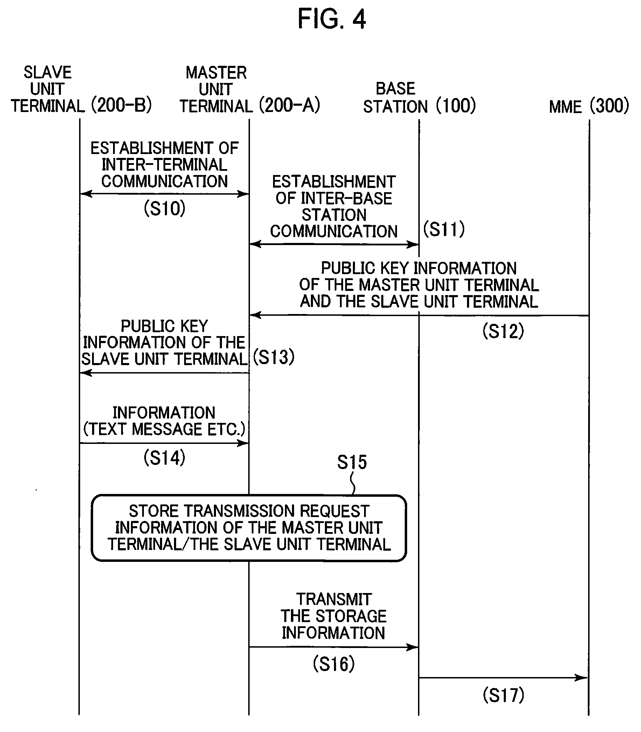

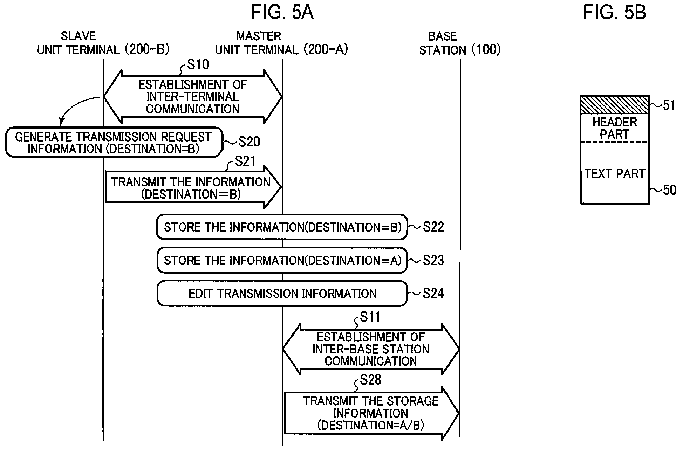

FIG. 3 is a diagram illustrating an example of how information is transferred in uplink communication, FIG. 4 is a sequence diagram illustrating an operation example of information transfer in uplink communication, and FIG. 5A through FIG. 6B are sequence diagrams illustrating typical operation examples of information transfer in uplink communication.

As depicted in FIG. 3, since a terminal 200-A is located in a range capable of inter-terminal communication with a terminal 200-B, the terminal 200-A receives information transmitted from the terminal 200-B and destined to "W" ("B→destined to W") from the terminal 200-B.

Also, the terminal 200-B receives information transmitted from the terminal 200-A and destined to "X" ("A→destined to X") from the terminal 200-A. This enables the terminal 200-A and the terminal 200-B to mutually share information ("B→destined to W" and "A→destined to X").

Meanwhile, since the terminal 200-A is located in a range capable of inter-terminal communication with a terminal 200-C, the terminal 200-A receives from the terminal 200-C information transmitted from the terminal 200-C and destined to "Y" ("C→destined to Y"). Also, the terminal 200-C receives from the terminal 200-A information transmitted from the terminal 200-A and destined to "X" ("A→destined to X"). This enables the terminal 200-A and the terminal 200-C to mutually share information ("C→destined to Y' and "A→destined to X").

However, the terminal 200-A does not transmit the information received from the terminal 200-C and destined to "Y" ("C→destined to Y') to the terminal 200-B. Also, the terminal 200-A does not transmit the information received from the terminal 200-B and destined to "W" ("B→destined to W") to the terminal 200-C. The above is based on a security problem, for example, so that the terminal 200-A is configured not to transmit the information received from the other terminals 200-B, 200-C to different terminals 200-C, 200-B, respectively, without permission of the other terminals 200-B, 200-C.

In the example of FIG. 3, there is illustrated an example such that the terminals 200-B, 200-C are not located in a range capable of inter-terminal communication with each other. For example, when the two terminals 200-B, 200-C are located in a range capable of inter-terminal communication, The terminal 200-B receives from the terminal 200-C information destined to "Y" ("C →destined to Y'), and also the terminal 200-C receives from the terminal 200-B information destined to "W" ("B→destined to W"). In this case, the two terminals 200-B, 200-C mutually share the information ("C→destined to Y' and "B→ destined to W"), resulting in that the three terminals 200-A to 200-C share the identical information. As such, when the terminals 200-A to 200-C are incapable of connection with the base station 100, for example, the information transmitted from the terminals 200-A to 200-C can be shared among each terminal 200-A to 200-C through the inter-terminal communication.

Among the terminals 200-A to 200-C, it is assumed that, after the information is stored as depicted in FIG. 3, the terminal 200-A is capable of connection with the base station 100, whereas the other terminals 200-B, 200-C are incapable of connection with the base station 100.

At this time, the terminal 200-A transmits (or transfers) the stored information ("A→destined to X", "B→destined to W" and "C→destined to Y') to the base station 100. The terminal 200-A transmits information transmitted from each terminal 200-B, 200-C collectively to the base station 100, for example. This enables preventing a communication isolation state in each terminal 200-A to 200-C, for example, to enable the terminal 200-A to 200-C to transmit safety information which the terminal 200-A to 200-C wants to transmit.

Additionally, in the example depicted in FIG. 3, a terminal 200-D is not located in any range capable of inter-terminal communication of the terminals 200-A to 200-C. Therefore, information transmitted from the terminal 200 and destined to "Z" ("D→destined to Z") is not transmitted to the base station 100.

In the present second embodiment, the terminal 200-A whose connection to the base station 100 is successfully made may be referred to as a "master unit terminal", for example. Also, each terminal 200-B, 200-C whose connection to the base station 100 is unsuccessful may be referred to as a "slave unit terminal", for example. The slave unit terminals 200-B, 200-C can communicate with the base station 100 with the help of the master unit terminal 200-A, for example. Alternatively, for example, the master unit terminal 200-A stores information transmitted from the slave unit terminals 200-B, 200-C, so as to transmit the stored information to the base station 100 in substitution for the slave unit terminals 200-B, 200-C. The master unit terminal 200-A includes, for example, a function of transmitting information, which is transmitted from the slave unit terminals 200-B, 200-C, to the base station 100, as a relay node.

That is all for the example of information transfer in uplink communication. As to such an example of information transfer, a deformation example and a typical example as described below, for example, may be possible.

Namely, the master unit terminal 200-A may transmit information the base station 100 and the slave unit terminals 200-B, 200-C using SMS (Short Message Service). Among information to be transmitted, voice data may be attached to the SMS, or a method of accessing voice data which is stored in a server etc. may be applicable.

Further, communication between the master unit terminal 200-A and the base station 100 and also communication between the base station 100 and the upper-level apparatus is data communication (PS: Packet Switch), for example. When communication is made through voice communication (CS: Circuit Switch), it may be possible to perform a mode change to the data communication in the middle of the voice communication.

The reason is that, in the event of a disaster etc., the voice communication easily becomes a target for restriction in comparison with the data communication because of requirement for real time, and therefore, it is easier to transfer information by the data communication than the voice communication.

Further, an authentication process is performed between the master unit terminal 200-A and the base station 100, whereas such an authentication process is not performed between the master unit terminal 200-A and the slave unit terminals 200-B, 200-C, for example. The reason is that, for example, it is considered that congestion currently occurs in a route from the base station 100 to the slave unit terminals 200-B, 200-C. The detail will be described later.

Also, for example, a different radio communication method and a different radio resource are used between the radio communication of the master unit terminal 200-A with the base station 100 (which may hereafter be referred to as "inter-base station communication") and the radio communication between each terminal 200-A to 200-C (which may hereafter be referred to as "inter-terminal communication"). This enables the coexistence of the inter-base station communication and the inter-terminal communication, for example.

In the present second embodiment, for example, to perform radio communication, the inter-base station communication is performed using an LTE-FDD (Frequency Division Duplex) method, whereas the inter-terminal communication is performed using an LTE-TDD (Time Division Duplex) method. The details will be described later.

Next, a description will be given on an example of information transfer in uplink communication. FIG. 4 is a sequence diagram illustrating an operation example of information transfer in uplink communication. In the example of FIG. 4, as an example of an upper-level apparatus, an MME (Mobility Management Entity) 300 is disposed, so that the MME 300 is connected to the base station 100.

The master unit terminal 200-A performs processing to establish a connection of the inter-terminal communication with the slave unit terminal 200-B (S10). Also, the master unit terminal 200-A performs processing to establish a connection of the inter-base station communication with the base station 100 (S11). A typical example of the processing to establish the connection will be described later.

Next, the base station 100 notifies the MME 300 that the connection with the master unit terminal 200-A is successfully established, and receives security information of the terminals 200-A, 200-B from the MME 300 (S12). The security information includes public key information, for example.

For example, the base station 100 notifies the MME 300 that the master unit terminal 200-A successfully establishes the connection with the slave unit terminal 200-B, so that can acquire the security information of the two terminals 200-A, 200-B from the MME 300.

The base station 100, on acquiring the security information from the MME 300, transmits the security information to the master unit terminal 200-A (S12). Also, the master unit terminal 200-A transmits the security information to the slave unit terminal 200-B which is located in the communicable range of the master unit terminal 200-A (S13).

The master unit terminal 200-A and the slave unit terminal 200-B perform, for example, encryption and decryption on information using the security information, to thereby ensure security of the information transmitted and received in the inter-terminal communication. To actualize the security function, for example, a PDCP (Packet Data Convergence Protocol) is used.

Next, the slave unit terminal 200-B transmits the information of the self-terminal to the master unit terminal 200-A which successfully establishes the inter-terminal communication (S14). The information to be transmitted includes, for example, a text message.

Next, the master unit terminal 200-A receives the information transmitted from the slave unit terminal 200-B, so as to store the received information (S15).

Additionally, each terminal 200-A, 200-B generates information such as a text message, and the information thus generated may be referred to as, for example, transmission request information. The master unit terminal 200-A, on receiving the transmission request information transmitted from the slave unit terminal 200-B, stores the transmission request information of the slave unit terminal 200-B. The master unit terminal 200-A may also store the transmission request information generated by the self-terminal.

Next, the master unit terminal 200-A, after storing the transmission request information, transmits the transmission request information to the base station 100 (S16). Such information transmitted from the master unit terminal 200-A to the base station 100 and collected therein may be referred to as, for example, storage information.

The base station 100, on receiving the storage information, transmits the received storage information to the MME 300 (S17).

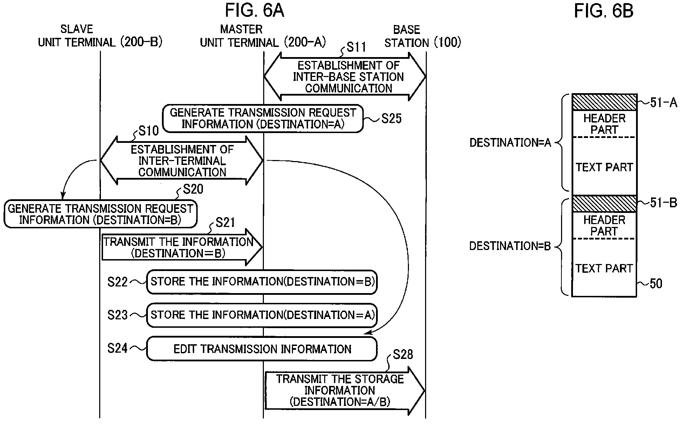

The foregoing description is made on the operation example of uplink communication. FIG. 5A and 6A are sequence diagrams illustrating operation examples in uplink communication. FIG. 5A illustrates an operation example when the master unit terminal 200-A, after establishing inter-terminal communication, establishes inter-base station communication to transmit storage information. On the other hand, FIG. 6A illustrates an operation example when the master unit terminal 200-A, after establishing inter-base station communication, establishes inter-terminal communication to transmit storage information.

A description will be given on FIG. 5A. An identical number is given to processing which is identical to FIG. 4.

The master unit terminal 200-A and the slave unit terminal 200-B establish inter-terminal communication (S10), so that the slave unit terminal 200-B generates transmission request information (S20). For example, the slave unit terminal 200-B generates transmission request information destined to "B".

Next, the slave unit terminal 200-B transmits the generated transmission request information to the master unit terminal 200-A (S21).

FIG. 5B is a diagram illustrating an example of packet data 50 which the slave unit terminal 200-B transmits to the master unit terminal 200-A. The slave unit terminal 200-B inserts the transmission request information into the text part of the packet data 50. Also, the slave unit terminal 200-B inserts an identifier which indicates inter-terminal communication into a partial area 51 of the header part, so as to transmit. I n the above example, the inter-terminal communication identifier is set to be an identifier which indicates radio communication between the slave unit terminal 200-B and the master unit terminal 200-A, for example.

I n the following, an identifier which indicates the presence or absence of inter-terminal communication may be referred to as a communication form identifier, for example. By the communication form identifier, the base station 100 and the upper-level apparatus located on an upper level than the base station 100 can recognize that the storage information transmitted from the terminal 200 is information which is acquired through the inter-terminal communication. Additionally, the slave unit terminal 200-B generates the communication form identifier by taking the opportunity of the establishment of the inter-terminal communication (S10), for example.

The master unit terminal 200-A, on receiving the transmission request information, stores the information concerned (S22). Then, the master unit terminal 200-A generates the transmission request information of the self-terminal and stores the information (S23). The master unit terminal 200-A generates storage information by encapsulating two sets of information, i.e. the transmission request information of the slave unit terminal 200-A (information destined to "A") and the transmission request information of the self-terminal (information destined to "B") to integrate into one (S24). FIG. 6B is a diagram illustrating an example of packet data 50 which includes the encapsulated storage information. Details will be described later.

Returning back to FIG. 5A, next, the master unit terminal 200-A establishes communication with the base station 100 (S11), to transmit the encapsulated storage information to the base station 100 (S28).

For example, the master unit terminal 200-A inserts the storage information into the text part of the packet data 50 and also inserts the communication form identifier which indicates inter-terminal communication into an area 51 of the header part, so as to transmit.

Next, a description will be given on an operation example illustrated in FI G. 6A.

The master unit terminal 200-A establishes inter-base station communication with the base station 100 (S11), to generate transmission request information (S25). For example, the master unit terminal 200-A generates transmission request information including a destination "A".

Next, the master unit terminal 200-A establishes inter-terminal communication with the slave unit terminal 200-B (S10), so that the slave unit terminal 200-B generates transmission request information (S20). For example, the slave unit terminal 200-B generates transmission request information including a destination "B".

Next, the slave unit terminal 200-B transmits the generated transmission request information (destination "B") to the master unit terminal 200-A (S21). For example, the slave unit terminal 200-B generates packet data 50 including the transmission request information to transmit to the master unit terminal 200-A.

The master unit terminal 200-A, on receiving the transmission request information, stores the transmission request information (S22). Also, the master unit terminal 200-A stores the transmission request information which is generated by the self-terminal (S23). I n this case, the master unit terminal 200-A generates packet data 50 which includes the transmission request information generated by the self-terminal (S23).

Next, the master unit terminal 200-A edits the stored transmission request information respectively, to generate storage information integrated into one (S24), so as to transmit the integrated storage information to the base station 100 (S28).

FIG. 6B illustrates an example of the packet data 50 transmitted from the master unit terminal 200-A to the base station 100. I n the packet data 50, there are included packet data generated by the master unit terminal 200-A and packet data generated by the slave unit terminal 200-B. There is formed a structure in which packet data generated by the plurality of terminals 200-A, 200-B are encapsulated into a single packet data 50. To each packet data header, each communication form identifier generated by taking the opportunity of the establishment of the inter-terminal communication is inserted into each area 51-A, 51-B.

For example, the master unit terminal 200-A, when editing the storage information (S24), generates the packet data 50 as depicted in FIG. 6B. To the text part of the packet data 50 depicted in FIG. 6B, the transmission request information generated by the master unit terminal 200-A and the slave unit terminal 200-B is inserted as unified storage information.

### < 2.2 Example of uplink communication>

Next, a description will be given on an example of information transfer in downlink communication. FIG. 7 illustrates an example of how information is transferred in a region crowded with people, such as a station front area etc., for example.

In FIG. 7, it is assumed that a terminal 200-X and a terminal 200-A are connected to the base station 100 to successfully acquire information from the base station 100. Also, it is assumed that terminals 200-Y, 200-B, 200-C fail to connect to the base station 100, so as to fail to acquire information. The information includes public information such as railway operation information and bus operation information, for example.

In the downlink communication also, for example, the terminals 200-X, 200-A which are connected to the base station 100 and acquire the information may be referred to as master unit terminals, whereas the terminals 200-Y, 200-B, 200-C which fail to connect to the base station 100 and fail to acquire information may be referred to as slave unit terminals.

Also, it is assumed that the master unit terminals 200-X, 200-A, taking the opportunity of, for example, receiving communication restriction information from the base station 100, perform processing as described below.

When the slave unit terminal 200-Y moves into the communicable range of the self-terminal 200-X, the master unit terminal 200-X transmits the information, such as the public information acquired from the base station 100, to the slave unit terminal 200-Y Also, when the slave unit terminal 200-B moves into the communicable range of the self-terminal 200-A, the master unit terminal 200-A transmits the information, acquired from the base station 100, to the slave unit terminal 200-B. Further, the slave unit terminal 200-B transmits the information, acquired from the master unit terminal 200-A, to the slave unit terminal 200-C which moves into the communicable range of the self-terminal 200-B. In this case, the slave unit terminal 200-B operates as a master unit terminal relative to the slave unit terminal 200-C.

As such, the master unit terminals 200-X, 200-Y connected to the base station 100 transmit the information, acquired from the base station 100, to the slave unit terminals 200-Y, 200-B, 200-C, using the inter-terminal communication. This enables the terminals 200-X, 200-Y and 200-A to 200-C to share public information, such as railway operation information, meteorological information, etc., in a region crowded with people in the event of a disaster etc., for example.

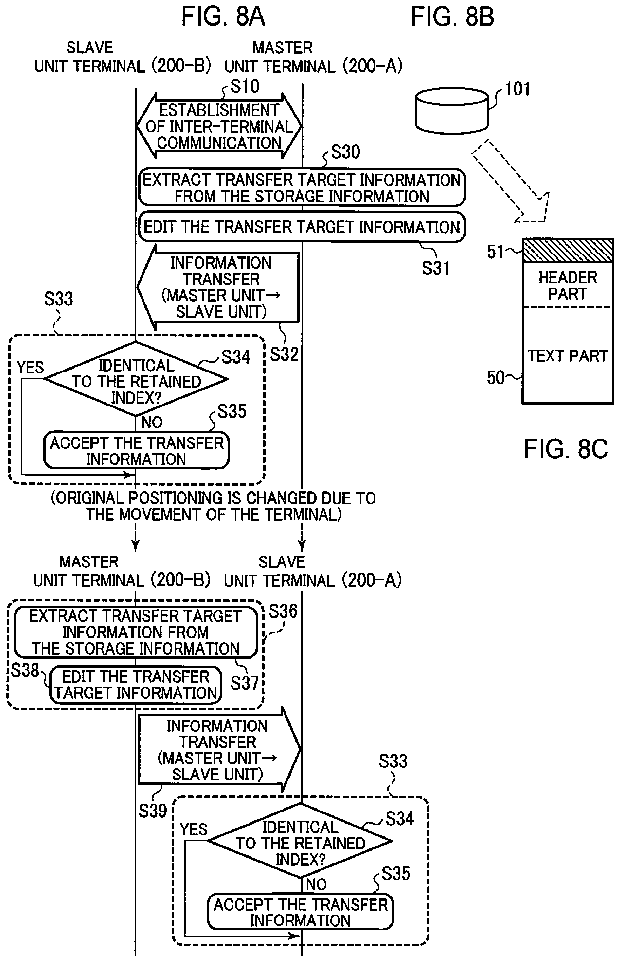

FIG. 8A is a sequence diagram illustrating an operation example of information transfer in downlink communication. The master unit terminal 200-A is assumed to acquire in advance information from the base station 100. Also, FIG. 8B is a diagram illustrating an example of storage information 101 which is acquired from the base station 100 and stored in the master unit terminal 200-A. Further, FIG. 8C is a diagram illustrating an example of the packet data 50 which the master unit terminal 200-A transmits to the slave unit terminal 200-B.

Here, in the downlink communication, information transmitted from the master unit terminal 200-A to the slave unit terminal 200-B may be referred to as transfer information, for example.

The master unit terminal 200-A establishes inter-terminal communication with the slave unit terminal 200-B (S10). For example, the master unit terminal 200-A establishes the inter-terminal communication with the slave unit terminal 200-B which moves into the communicable range of the self-terminal 200-A.

Next, the master unit terminal 200-A extracts transfer target information from the storage information 101 (S30). For example, the master unit terminal 200-A extracts public information such as railway operation information and meteorological information from among the storage information 101, as the transfer target information.

Such extraction is performed in the following manner, for example. Namely, the master unit terminal 200-A retains an address related to a transmission source from which the public information is transmitted. Then, the master unit terminal 200-A determines the storage information 101, which includes a transmission source address coincident with the retained transmission source address, to be the transfer target information. Alternatively, by the inclusion of an information type in the information acquired from the base station 100, the master unit terminal 200-A may determine information, whose type is coincident with a type determined by a common carrier etc., to be a transfer target.

Next, the master unit terminal 200-A edits the transfer target information (S31) to transmit the edited transfer target information to the slave unit terminal 200-B (S32). For example, as a result of the edition by the master unit terminal 200-A, packet data 50 (for example, FIG. 8C) is generated.

The packet data 50 for use for the inter-terminal communication in downlink communication also includes a text part and a header part. The transfer information is inserted into the text part, whereas a communication form identifier indicative of inter-terminal communication is inserted in a partial area 51 of the header part. For example, the master unit terminal 200-A, taking the opportunity of the establishment of the inter-terminal communication between with the slave unit terminal 200-B, generates the communication form identifier. In the downlink direction, information identifier is a different identifier depending on the transfer information, for example. For example, the information identifier is represented by a numerical value and represents the inter-terminal communication when the numerical value is within a certain range, and moreover, it is possible to identify from other transfer information by the exact numerical value.

The slave unit terminal 200-B, on receiving the transfer information, performs processing of S33. Namely, the slave unit terminal 200-B discriminates whether or not the transfer information is identical to an index retained therein (S34).

For example, from the received packet data 50, the slave unit terminal 200-B extracts the communication form identifier, which is inserted in the area 51, indicating the inter-terminal communication, so that can perform discrimination by whether or not the extracted communication form identifier is coincident with the communication form identifier of the transfer information stored in the slave unit terminal 200-B.

The slave unit terminal 200-B, when the communication form identifier is not identical to an index retained therein (No in S34), accepts the transfer information (S35).

For example, when the extracted communication form identifier is not identical to the stored communication form identifier, the slave unit terminal 200-B determines to be new transfer information which is different from the transfer information stored in the self-terminal, so as to extract the transfer information from the text part of the received packet data 50 to store into a memory etc.

On the other hand, when the communication form identifier is identical to the retained index (Yes in S34), the slave unit terminal 200-B does not accept the transfer information.

For example, if the extracted communication form identifier is identical to the stored communication form identifier, the received transfer information is already stored, and therefore, the slave unit terminal 200-B does not extract the received transfer information, and instead, performs processing such as discarding, etc.

The processing S33 is performed to prevent a resonance phenomenon, for example. The resonance phenomenon signifies a phenomenon of repeating for many times the holding of the identical information in between each terminal 200-A, 200-B, for example.

For example, public information etc., received and stored in the master unit terminal 200-A, may be transmitted unconditionally to the slave unit terminal 200-B located within the communicable range. However, if the slave unit terminal 200-B already stores the information of concern or on the occurrence of such an event that the master unit terminal 200-A becomes a slave unit terminal and the slave unit terminal 200-B becomes a master unit terminal, the identical information may be received for many times. Therefore, the slave unit terminal 200-B is configured not to accept the received transfer information on discriminating that transfer information identical to the stored transfer information is received, on the basis of the communication form identifier indicative of the inter-terminal communication, to thereby prevent the resonance phenomenon.

Additionally, according to the present second embodiment, for example, the terminal 200-A does not transmit to the slave unit terminal 200-B any indication that the self-terminal is a master unit terminal, and also the terminal 200-B does not transmit to the master unit terminal 200-A any indication that the self-terminal is a slave unit terminal. For example, the prevention of the resonance phenomenon through the processing of S33 enables information sharing without notification on either of which is a master unit terminal or a slave unit terminal between the terminals 200-A, 200-B.

In the sequence diagram of FIG. 8A, there is also included an operation example when the slave unit terminal 200-B becomes a master unit terminal and the master unit terminal 200-A becomes a slave unit terminal.

Namely, there is a case that, after Yes in S34 or after the completion of the processing of S35, the slave unit terminal 200-B, by the movement thereof, connects to the base station 100. In such a case, the slave unit terminal 200-B can receive new information from the base station 100. On the other hand, there is a case that the master unit terminal 200-A, even after the movement thereof, is unable to connect to the base station 100, and unable to newly receive information. In such a case, for example, the slave unit terminal 200-B becomes a master unit terminal and the master unit terminal 200-A becomes a slave unit terminal, to perform the processing of S36 and subsequent thereto.

Namely, the master unit terminal 200-B stores information received from the base station 100 and extracts transfer target information from the stored information (S37). For example, the master unit terminal 200-B extracts public information as transfer information target information.

Next, the master unit terminal 200-B edits the transfer target information (S38) to transmit to the slave unit terminal 200-A (S39). The transmission format is, for example, the format of the packet data 50 as depicted in FIG. 8C.

Then, the slave unit terminal 200-A discriminates whether or not the received transfer information is identical to the stored transfer information on the basis of the communication form identifier indicative of the inter-terminal communication (S34). If the received communication form identifier is not identical to the stored communication form identifier, the slave unit terminal 200-A stores the new transfer information (S35), whereas if the two communication form identifiers are not identical, the slave unit terminal 200-A is configured not to accept the transfer information. By this, for example, the resonance phenomenon is prevented.

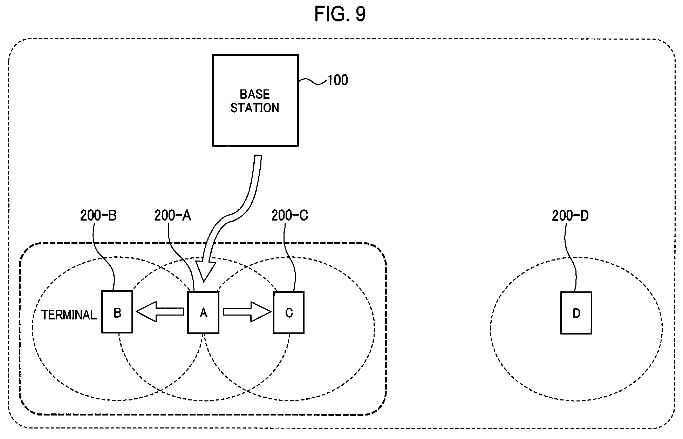

FIG. 9 is a diagram illustrating an example on how information is transferred in downlink communication. In FIG. 7, the description has been given on the operation after the master unit terminal 200-A receives and stores information from the base station 100. In FIG. 9, an example including reception operation from the base station 100 is illustrated.

Namely, the master unit terminal 200-A establishes connection with the base station 100 to receive information such as public information transmitted from the base station 100. The base station 100 may transmit the information, for example, by transmitting the packet data 50 (for example, FIG. 8C).

The master unit terminal 200-A transmits the information, which is received from the base station 100 through the inter-terminal communication, to the slave unit terminals 200-B, 200-C which are located in the communicable range of the self-terminal 200-A. In this case, the master unit terminal 200-A may transmit to the slave unit terminals 200-B, 200-C after storing the information received from the base station 100, or may transmit to the slave unit terminals 200-B, 200-C without storing.

The master unit terminal 200-A may transmit to the slave unit terminals 200-B, 200-C all information received from the base station 100 or may transmit after extracting information, which is coincident with a certain condition or permitted information, from the stored information. It may also be possible, for example, to transmit the public information as described earlier, or transmit information within a certain time after the reception time, so as not to transmit information after the lapse of the certain time.

As to the discrimination of the public information, since information type may be included in the header part of the packet data 50 which is transmitted from the base station 100, the master unit terminal 200-A may perform the discrimination based on the above information type. Alternatively, the master unit terminal 200-A may discriminate to be public information if the transmission source is a transmission source which is registered in advance, as described earlier.

Here, in FIG. 9, because the terminal 200-D is located out of the communicable range of the master unit terminal 200-A, the terminal 200-D is unable to receive the information transmitted from the base station 100.

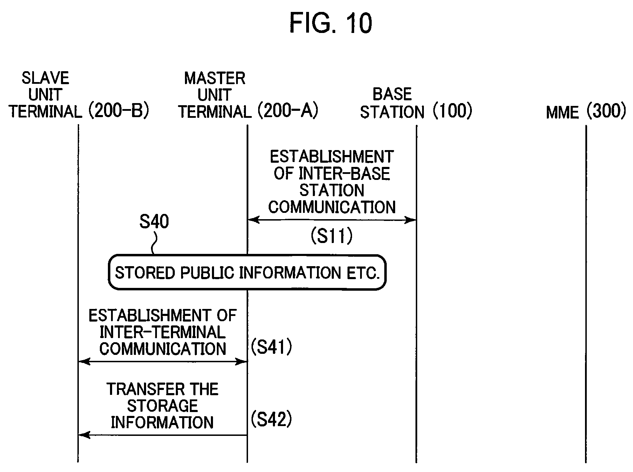

FIG. 10 is a sequence diagram illustrating an operation example of information transfer in downlink communication. The master unit terminal 200-A establishes inter-base station communication with the base station 100 (S11), to store information transmitted from the base station 100 (S40). Information to be stored includes public information etc., for example.

Then, the master unit terminal 200-A, after establishing the inter-terminal communication with the slave unit terminal 200-B (S41), transfers the stored storage information (S42).

### < 3. Configuration example of network system>

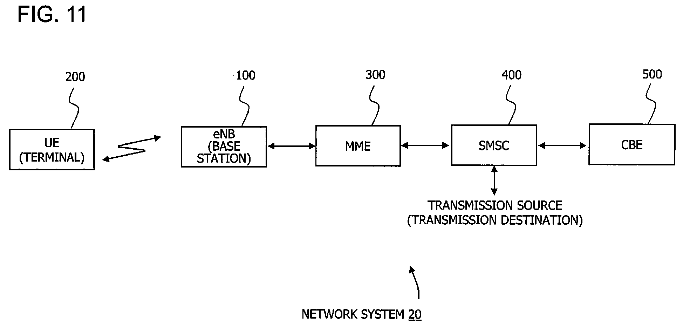

Next, a description will be given on a configuration example of a network system. FIG. 11 is a diagram illustrating the configuration example of a network system 20.

The network system 20 includes a base station 100, a terminal 200, an MME 300, an SMSC (Short Message Service Center) 400 and a CBE (Cell Broadcast Entity) 500.

The terminal 200 transmits to the base station 100 storage information which is acquired through the inter-terminal communication etc. Also, the terminal 200 receives information such as public information transmitted from the base station 100. Between the terminal 200 and the base station 100, not only in downlink communication but in uplink communication also, for example, packet data 50 (for example, FIG. 5B) is transmitted and received. The detail of the terminal 200 will be described later.

The base station 100, on receiving the packet data 50 from the terminal 200, extracts storage information from the text part, to transmit to the MME 300. Also, on receiving public information etc. transmitted from the MME 300, the base station 100 transmits the public information etc. to the terminal 200. Further, on receiving communication restriction information transmitted from the MME 300, the base station 100 broadcast transmits the communication restriction information as notification information. The detail of the base station 100 will also be described later.

The MME 300 performs, for example, movement control of the terminal 200, authentication (or security control), transfer route setting processing of user data etc., and so on. Also, when the storage information received from the base station 100 is encapsulated information transmitted from a plurality of terminals 200, the MME 300 divides the information on the basis of each transmission destination identifier, to transmit the divided information to each transmission destination. Here, since actual transmission is performed in the SMSC 400, the MME 300 outputs the transmission destination and the received information to the SMSC 400.

Also, the MME 300 receives information such as public information transmitted from the SMSC 400, and identifies a base station 100 which accommodates a destination master unit terminal 200-A, so as to transmit the information such as the public information to the identified base station 100.

Further, the MME 300 receives communication restriction information transmitted from the SMSC 400, determines an area to distribute the communication restriction information to identify a base station 100 in the area concerned, so as to transmit the communication restriction information to the identified base station 100. The detail of the MME 300 will be described later.

For example, the SMSC 400 performs processing such as generating an SMS (Short Message Service) message to transmit to a transmission destination. The SMS message is standardized as a part of the standard of GSM (Registered Trademark) (Global System for Mobile communications), and can transmit information up to 140 bytes. For example, the SMSC 400 attaches the storage information received from the MME 300 to the generated SMS and so on, to transmit to the transmission destination.

Also, the SMSC 400, on receiving public information etc. from a transmission source, transmits the received public information to the MME 300. Further, on receiving a distribution request of emergency information from the CBE 500, the SMSC 400 identifies the distribution area of the emergency information, and further, generates communication restriction information. The SMSC 400 transmits the generated communication restriction information to the MME 300. The detail of the SMSC 400 will also be described later.

The CBE 500, on detecting the occurrence of an emergency such as an earthquake and a tsunami for example, requests the SMSC 400 to distribute the emergency information. The CBE 500 is installed at the Meteorological Agency or the like, for example.

### <4. Configuration examples of terminal and base station>

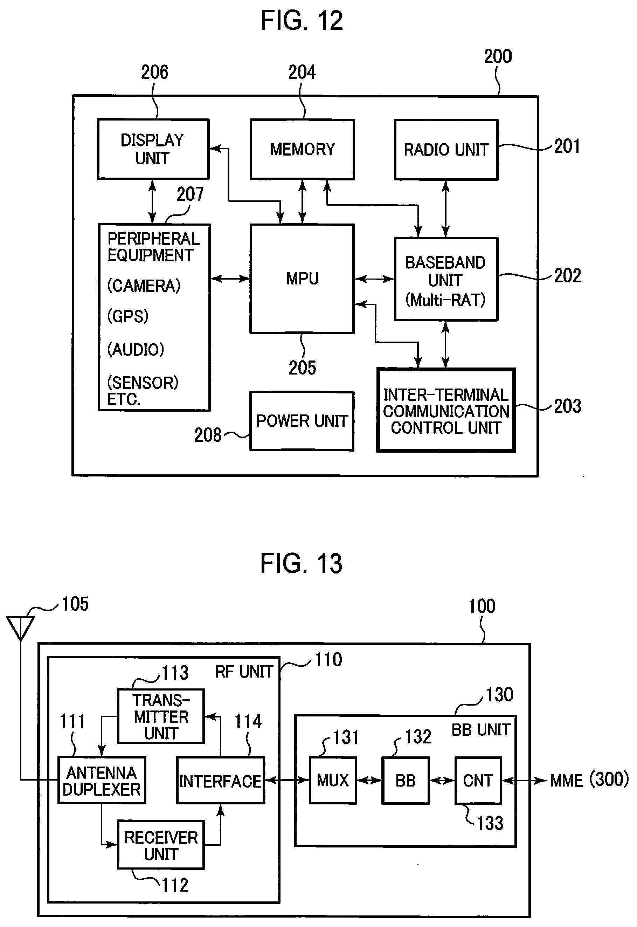

Next, configuration examples of the terminal 200 and the base station 100 will be described. FIG. 12 is a configuration example of the terminal 200, and FIG. 13 is a configuration example of the base station 100, respectively.

The terminal 200 includes a radio unit 201, a baseband unit 202, an inter-terminal communication control unit 203, a memory 204, an MPU (Micro Processor Unit) 205, a display unit 206, a peripheral equipment unit 207, a power unit 208 and an antenna 209.

The radio unit 201 converts (downconverts) a radio signal which is received by the antenna 209 into a baseband reception signal, to output to the baseband unit 202, for example. Also, the radio unit 201 converts (upconverts) a transmission signal, which is output from the baseband unit 202, into a radio signal in a radio band to output to the antenna 209. The radio unit 201 may internally include a frequency conversion circuit so as to perform such conversion.

The baseband unit (Multi-RAT(Radio Access Technology)) 202 performs demodulation processing, error correction decoding processing, etc. on the reception signal which is output from the radio unit 201, to extract a control signal, and also extract packet data 50 (for example, FIG. 5A) etc. transmitted from the base station 100 and another terminal. The baseband unit 202 outputs the control signal to the MPU 205, and also outputs the packet data 50 etc. to the memory 204.

Here, when extracting the packet data 50, the baseband unit 202 extracts the packet data 50 destined to the self-terminal by the control of the MPU 205, according to scheduling information included in the control signal. This enables the extraction of the packet data 50 destined from the base station 100 to the terminal 200.

Also, the baseband unit 202 performs error correction coding processing, modulation processing, etc. on the packet data 50 which is read out from the memory 204, to convert into a transmission signal and output the transmission signal to the radio unit 201. The packet data 50 is transmitted to another terminal (for example, slave unit terminal) and the base station 100.

In this case also, the baseband unit 202 outputs the transmission signal by the control of the MPU 205, for example, according to the scheduling information, so that can transmit the transmission signal to the base station 100, using a radio resource instructed from the base station 100.

The inter-terminal communication control unit 203 performs processing for establishing inter-terminal communication when the inter-terminal communication is performed in the terminal 200, for example, and allocates a radio resource according to a communication method (for example, the LET-TDD method etc.). In this case, the inter-terminal communication control unit 203 allocates the radio resource according to a communication method, which is different from the method for the inter-base station communication, according to the scheduling information received from the MPU 205. The detail of the allocation of the radio resource will be described later. The inter-terminal communication control unit 203 controls the baseband unit 202 to transmit the packet data 50 at the timing and the frequency of the allocated radio resource.

Also, the inter-terminal communication control unit 203 generates and terminates a message to establish the inter-terminal communication, etc., for example.

The memory 204 stores the packet data 50 which is output from the baseband unit 202. This enables the terminal 200 to store the transmission request information transmitted from the slave unit terminal and the public information received from the base station 100.

Also, the memory 204 stores information etc. generated in the display unit 206 and the peripheral equipment unit 207 by the control of the MPU 205. In this case, the information stored in the memory 204 becomes the transmission request information of the self-terminal 200, for example.

The MPU 205 performs a variety of control on the baseband unit 202, the inter-terminal communication control unit 203, the memory 204, the display unit 206 and the peripheral equipment unit 207.

For example, the MPU 205 controls the baseband unit 202 to receive packet data transmitted from the base station 100 at the timing and the frequency of the allocated radio resource, and to transmit the packet data 50 to the base station 100.

Also, the MPU 205 may output the scheduling information, which is received from the baseband unit 202, to the inter-terminal communication control unit 203, so that can control to perform the inter-terminal communication using a communication method different from the inter-base station communication.

Further, the MPU 205 reads out the transmission request information stored in the memory 204, to generate and output packet data 50 to the baseband unit 202, as packet data 50 including the storage information. The packet data 50 including the storage information is transmitted to the base station 100 or a master unit terminal.

Also, the MPU 205 reads out the information such as the public information stored in the memory 204, to generate packet data 50 and output to the baseband unit 202, as packet data 50 including transfer information. The packet data 50 including the transfer information is transmitted to a slave unit terminal.

The display unit 206 converts information read out from the memory 204 into a display format to display by the control of the MPU 205. This enables the MPU 205 to cause to display the public information such as railway operation information and meteorological information on the display unit 206, for example.

The peripheral equipment unit 207 is, for example, a camera unit, a GPS (Global Positioning System) processing unit, a voice input/output unit (or audio unit). The peripheral equipment unit 207 performs processing such as imaging a video and acquiring the present position of the terminal 200 by the GPS processing unit, by the control of the MPU 205.

The power unit 208 supplies power to each unit of the terminal 200 such as the radio unit 201 etc., for example.

The antenna 209 transmits a radio signal, which is output from the radio unit 201, to the base station 100 and another terminal. Also, the antenna 209 receives each radio signal transmitted from the base station 100 and the other station, to output to the radio unit 201.

FIG. 13 is a diagram illustrating a configuration example of the base station 100. The base station 100 includes an antenna 105, an RF unit 110 and a BB unit 130. I n the example of FIG. 3, there are one RF unit 110 and one antenna 105, respectively. However the base station 100 may include a plurality of RF units 110 and a plurality of antennas 105.

The RF unit 110 includes an antenna 105, an antenna duplexer 111, a receiver unit 112, an interface 114 and a transmitter unit 113.

The antenna 105 transmits a radio signal which is output from the antenna duplexer 111, to a subordinate terminal 200. Also, the antenna 105 receives a radio signal transmitted from the terminal 200, and outputs the received signal to the antenna duplexer 111.

The antenna duplexer 111 is, for example, a separator for separating transmission from reception, and outputs a radio signal which is output from the transmitter unit 113 to the antenna 105, and also outputs a radio signal which is output from the antenna 105 to the receiver unit 112.

The receiver unit 112 converts (downconverts) a radio signal received from the antenna duplexer 111 into a baseband reception signal, and also converts the converted reception signal into a digital signal. The receiver unit 112 may also be configured to internally include a frequency conversion circuit and an analog-to-digital conversion circuit. The receiver unit 112 outputs the converted reception signal to the interface 114.

The transmitter unit 113 converts a transmission signal which is output from the interface unit 114 into an analog signal, converts (upconverts) a baseband transmission signal into a transmission signal in a radio band, and so on. To perform such conversion, the transmitter unit 112 may be configured to internally include a frequency conversion circuit, an analog-to-digital conversion circuit, etc.

The interface 114 converts the reception signal which is output from the receiver unit 112 into a format to be output to the BB unit 130, to output the converted reception signal to the BB unit 130. Also, the interface 114 receives, for example, the transmission signal of a predetermined format which is output from the BB unit 130, and extracts a transmission signal to output the extracted transmission signal to the transmitter unit 113.

The BB unit 130 includes a MUX (Multiplexer) 131, a BB (Base Band) processing unit 132 and a CNT (Controller) 133.

The MUX 131 extracts a reception signal from the reception signal of a predetermined format which is output from the RF unit 110, and outputs the extracted reception signal to the BB processing unit 132. For example, when a plurality of RF units 110 are connected to the BB unit 130, the MUX 131 extracts each reception signal from the reception signal of the predetermined format output from each RF unit 110, and multiplexes each reception signal to output to the BB processing unit 132.

Also, the MUX 131 converts a transmission signal which is output from the BB processing unit 132 into a format which can be output to the RF unit 110, so as to output to the RF unit 110. When the plurality of RF units 110 are connected to the BB unit 130, the MUX 131 splits the transmission signal output from the BB processing unit 132, and converts each split transmission signal into a predetermined format to output to each RF unit 110.

The BB processing unit 132 performs demodulation processing, error correction decoding processing, etc. on the reception signal which is output from the MUX 131, so as to extract packet data 50. The BB processing unit 132 outputs the extracted packet data 50 to the CNT 133. Also, the BB program 132 performs error establishment coding processing, modulation processing, etc. on the packet data 50 which is output from the CNT 133, communication restriction information, etc., to convert into a transmission signal, so as to output the transmission signal to the MUX 13. The BB processing unit 132 may be configured to internally include a modulation circuit, an error correction coding circuit, etc. so as to perform such the modulation processing, the error correction coding processing, etc.

The CNT 133 extracts storage information etc. from the packet data 50 which is output from the BB processing unit 132, to transmit the extracted storage information etc. to the MME 300. Also, the CNT 133, on receiving information such as public information from the MME 300, generates packet data 50 including the information of concern, to transmit to the BB unit 132. Further, on receiving the communication restriction information from the MME 300, the CNT 133 outputs the received communication restriction information to the BB processing unit 132.

Moreover, the CNT 133 performs radio resource allocation (or scheduling) to the terminal 200 which is subordinate to the base station 100, for example, and outputs information related to the allocated radio resource (or scheduling information) to the BB processing unit 132, as a control signal. The CNT 133 controls the BB processing unit 132 so that can transmit the packet data 50 etc. to the terminal 200 according to the scheduling information, and can receive the packet data 50 transmitted from the terminal 200.

I n the present second embodiment, the CNT 133 performs the scheduling in a manner to apply a communication method which is different from the communication method for the inter-terminal communication (for example, the LTE-FDD method when the LTE-TDD method is applied to the inter-terminal communication). The detail will be described later.

### < 5. Configuration examples of MME and SMSC>

Next, configuration examples of the MME 300 and the SMSC 400 will be described.

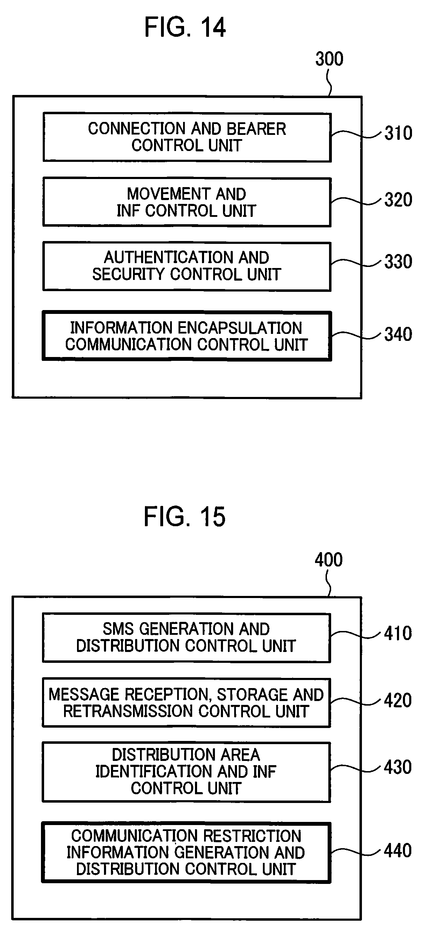

FIG. 14 is a diagram illustrating a configuration example of the MME 300. The MME 300 includes a connection and bearer control unit 310, a movement and INF (Interface) control unit 320, an authentication and security control unit 330 and an information encapsulation communication control unit 340.

The connection and bearer control unit 310 controls the establishment and the release of a bearer which is a connection between the base station 100 and the terminal 200, for example, to generate and terminate a message related to the establishment and the release of the bearer. By this, the setting processing of a transfer route for public information etc. is performed, for example. Also, the connection and bearer control unit 310 confirms the distribution area of the communication restriction information, for example, to transmit the communication restriction information which is transmitted from the SMSC 400, to each base station 100 in the distribution area.

The movement and INF control unit 320 performs, for example, movement control including the position registration and the handover of the terminal 200. For example, the movement and INF control unit 320 performs processing such as managing to which base station 100 the terminal 200 is disposed in subordination, determining a base station 100 to be a handover destination to notify the base station 100, and so on.

The authentication and security control unit 330 performs authentication processing to the terminal 200, for example. The authentication and security control unit 330 exchanges a NAS message between with the base station 100 to perform the authentication processing, for example. The authentication and security control unit 330 generates security information, to transmit to the master unit terminal 200-A using the NAS message, for example.

I n the present second embodiment, the MME 300 performs authentication processing to the terminal 200-A, whereas does not perform authentication processing to the terminal 200-B. By the omission of the authentication processing, it is aimed to prevent the occurrence of congestion, for example.

The information encapsulation communication control unit 340 performs, for example, processing such as receiving encapsulated transfer information which is transmitted from a master unit terminal, and separating the transfer information, so as to transmit to a designated transmission destination, and so on. Here, since actual transmission is performed in the SMSC 400, the information encapsulation communication control unit 340 transmits the transmission destination and the encapsulated information to the SMSC 400.

Additionally, when the transfer information is transmitted from a single terminal 200, the information encapsulation communication control unit 340 does not perform the separation processing, and transmits the received transfer information and the transmission destination information to the SMSC 400.

FIG. 15 is a diagram illustrating a configuration example of the SMSC 400. The SMSC 400 includes an SMS generation and distribution control unit 410, a message reception, storage, and retransmission control unit 420, a distribution area identification and INF control unit 430, and a communication restriction information generation and distribution control unit 440.

The SMS generation and distribution control unit 410 receives the transmission destination and the transfer information (or encapsulated transfer information) which are transmitted from the MME 300, generates an SMS including the received information, to transmit the SMS to the transmission destination, for example. This causes the transmission of the transfer information etc., which is transmitted from the master unit terminal 200-A, to the transmission destination, for example.

Also, the SMS generation and distribution control unit 410 receives an SMS which is transmitted from the transmission destination, extracts public information etc. included in the SMS, to transmit to the MME 300, for example. This causes the transmission of the public information etc. to the master unit terminal 200-A through the MME 300 etc., for example.

The message reception, storage, and retransmission control unit 420 receives a message related to an emergency information distribution request transmitted from the CBE 500, to store into a memory etc., for example. Also, when normally receiving the message related to the emergency information distribution request, the message reception, storage, and retransmission control unit 420 generates a response message to the message, to transmit to the CBE 500, whereas when the normal reception fails, transmits a retransmission request to the CBE 500. Here, when normally receiving the message related to the emergency information distribution request, the message reception, storage, and retransmission control unit 420 notifies the communication restriction information generation and distribution control unit 440 to that effect.

The distribution area identification and I NF control unit 430, on receiving an instruction from the communication restriction information generation and distribution control unit 440, identifies a distribution area for distributing the communication restriction information, for example. The distribution area identification and INF control unit 430 determines the distribution area on the basis of a disaster type, the point in which the disaster occurs, the scale thereof, etc., for example. The distribution area identification and INF control unit 430 outputs the determined distribution area to the communication restriction information generation and distribution control unit 440, for example.

The communication restriction information generation and distribution control unit 440, when receiving the notification from the message reception, storage, retransmission control unit 420 to the effect that the emergency information distribution request is received, instructs the distribution area identification and INF control unit 430 to identify the distribution area of the communication restriction information, for example. Then, on receiving from the distribution area identification and INF control unit 430 the information related to the distribution area, the communication restriction information generation and distribution control unit 440 generates emergency information, and also generates communication restriction information including the emergency information. The communication restriction information generation and distribution control unit 440 generates the communication restriction information whose transmission destination is the area of concern, for example.

At this time, the communication restriction information generation and distribution control unit 440 generates the communication form identifier, so as to transmit by including in the communication restriction information. The communication form identifier is an identifier for notifying the base station 100 and the terminal 200 of the occurrence or non-occurrence of a restriction state based on an early warning, for example.

As such, the communication form identifier is, in one aspect, an identifier which indicates the occurrence or non-occurrence of the restriction state, whereas in another aspect, represents an identifier which indicates the existence or nonexistence of the inter-terminal communication, as described earlier. The communication form identifier may include two identifiers separately, or the contents of the two identifiers may be expressed by a single numerical value or the like. Additionally, the communication form identifier, as the detail of which will be described later, may also represent an identifier for identifying transfer information from different transfer information. Therefore, the communication form identifier may be configured to include three identifiers separately, or may be configured to identify the contents of the three identifiers by a single numerical value or the like.

The master unit terminal 200-A, on receiving the communication restriction information, recognizes that the network side is in the communication restriction state on the basis of the communication form identifier, to shift to a state capable of inter-terminal communication, for example.

### < 6. Operation example>

Next, each operation example of the radio communication system 10 and the network system 20 will be described. I n the operation example, the description will be given in the following order.
< 6.1 Transmission of communication restriction information>
< 6.2 Establishment processing of inter-base station communication and inter-terminal communication>
< 6.3 Operation example of uplink communication>
< 6.4 Operation example of downlink communication>
< 6.5 State transition of terminal>
< 6.6 Communication method of terminal and example of radio resource allocation>
< 6.7 Operation flow of terminal>
< 6.8 Operation flow of MME>
< 6.9 Overall operation flow on the network side>

The operation of the present mobile communication system 10 and the network system 20 is started from the transmission of communication restriction information to the terminal 200. I n regard to how the communication restriction information is generated and transmitted, a description will be given in < 6.1 Transmission of communication restriction information>.

Next, the terminal 200, on receiving the communication restriction information, shifts to an inter-terminal communication permission state in which the inter-terminal communication is permitted. However, when the terminal 200 becomes impossible to communicate with the base station 100 due to communication restriction, congestion, etc., the communication with the base station 100 is disconnected. Thereafter, to establish communication with the base station 100, the terminal 200 performs processing for establishing inter-base station communication. Also, the terminal 200 performs processing to establish inter-terminal communication with another terminal. In < 6.2 Establishment processing of inter-base station communication and inter-terminal communication>, processing for establishing the inter-base station communication and the inter-terminal communication will be described.

Next, on establishing the inter-terminal communication and the inter-base station communication, the terminal 200 transmits storage information received from another terminal to the base station 100, and also receives transfer information from the base station 100 to transmit to another terminal. The transmission of the storage information and the transmission of the transfer information will be described in < 6.3 Operation example of uplink communication> and < 6.4 Operation example of downlink communication>, respectively.

Finally, with regard to the examples of the state transition of the terminal 200 and the radio resource allocation, the operation flow of each apparatus will be described in < 6.5 State transition of terminal> through < 6.9 Overall operation flow on the network side>.

### < 6.1 Transmission of communication restriction information>

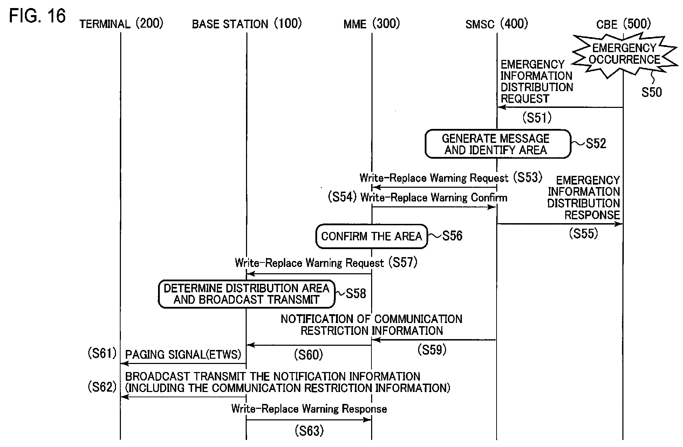

FIG. 16 is a diagram illustrating a sequence example related to the transmission of the communication restriction information. In FIG. 16, there is illustrated an example of how the communication restriction information is transmitted to the terminal 200 when the CBE 500 installed at the Meteorological Agency etc. detects an emergency such as an earthquake, a tsunami, etc.

The CBE 500, on detecting the occurrence of the emergency (S50), transmits an emergency information distribution request to the SMSC 400 (S51).

For example, when the CBE 500 detects a wave peculiar to an earthquake or a tsunami etc. on the basis of information transmitted from a sensor etc. installed offshore, the CBE 500 transmits to the SMSC 400 an emergency information distribution request which includes information such as the type, the occurrence point, the scale, etc. of the disaster.

The SMSC 400, on receiving the emergency information distribution request, generates a message text to be transmitted to the terminal 200, and further, identifies a transmission area (or distribution area) (S52). For example, the communication restriction information generation and distribution control unit 440 depicted in FIG. 15 generates the message text on the basis of the disaster type, the point of occurrence, the scale, etc., and instructs the distribution area identification and INF control unit 430 to identify the distribution area.

Next, the SMSC 400 generates a Write-Replace Warning Request message to transmit to the MME 300 (S53).

The Write-Replace Warning Request message includes, for example, a disaster type, a message text to be distributed, a distribution area, etc. For example, the communication restriction information generation and distribution control unit 440 as depicted in FIG. 15 extracts the disaster type etc. from the emergency information distribution request, and receives the distribution area from the distribution area identification and INF control unit 430, so as to generate the message of concern which includes the above information.

The MME 300, on receiving the Write-Replace Warning Request message, transmits to the SMSC 400 a Write-Replace Warning Confirm message which indicates that the Write-Replace Warning Request message is received (S54).

For example, the connection and bearer control unit 310 depicted in FIG. 14, on receiving the Write-Replace Warning Request message, generates the Write-Replace Warning Confirm message as a response message, to transmit to the SMSC 400.

Next, the MME 300 confirms the distribution area (S56), and transmits the Write-Replace Warning Request message to the base station 100 which is included in the distribution area (S57).

For example, the connection and bearer control unit 310 depicted in FIG. 14 extracts the distribution area from the Write-Replace Warning Request message, to confirm each base station 100 in the distribution area of concern, and transmits the message of concern to the confirmed base station 100.

The base station 100, on receiving the Write-Replace Warning Request message, determines the distribution area and determines to perform broadcasting distribution (or broadcast distribution) to the determined distribution area (S58).

For example, the CNT 133 depicted in FIG. 13 receives the Write-Replace Warning Request message, and extracts from the message the disaster type, the distribution area, the message text, etc. Then, the CNT 133 determines to broadcast distribute the message text to the extracted distribution area.

Meanwhile, the SMSC 400, on receiving from the MME 300 the Write-Replace Warning Confirm message (S54), transmits an emergency information distribution response to the CBE 500 (S55). For example, the present processing is performed by the communication restriction information generation and distribution control unit 440 depicted in FIG. 15. This enables the SMSC 400 to notify the CBE 500 that the distribution request is received and the processing is started.

Next, the SMSC 400 generates communication restriction information, and transmits the generated communication restriction information to the MME 300 (S59).

For example, the communication restriction information generation and distribution control unit 440 as depicted in FIG. 15, after transmitting the emergency information distribution response to the CBE 500 (S55), generates the communication restriction information. At this time, the communication restriction information generation and distribution control unit 440 generates the communication restriction information which includes the communication form identifier. In this case, the communication restriction information generation and distribution control unit 440 generates the communication form identifier which indicates the occurrence of communication restriction, to transmit by including the communication form identifier in the communication restriction information. As will be described later, the terminal 200 can determine to perform the inter-terminal communication on the basis of the communication form identifier which is included in the communication restriction information.

The MME 300, on receiving the communication restriction information from the SMSC 400 (S59), transmits the communication restriction information to the base station 100 which is located in the confirmed area (S56) (S60). For example, the connection and bearer control unit 310 as depicted in FIG. 14 receives the communication restriction information, so as to transmit the communication restriction information to the base station 100 located in the confirmed area.

Meanwhile, the base station 100 determines a distribution area (S58), and on receiving the communication restriction information from the MME 300 (S60), transmits a Paging signal to each terminal 200 located in the determined area (S61).

For example, the base station 100 transmits the Paging signal to the terminal 200 which is in the standby state, to notify that there is a transmission of the communication restriction information, to cause the terminal 200 to shift to a state in which the communication restriction information can be received. For example, the CNT 133 as depicted in FIG. 13 generates a Paging signal to instruct the BB processing unit 132 so that the Paging signal is to be transmitted to the inside of the determined area.

Next, the base station 100 generates notification information which includes the communication restriction information, to broadcast distribute the generated notification information (S62).

For example, the CNT 133 as depicted in FIG. 13 generates the notification information which includes the communication restriction information received from the MME 300 (S60), to output to the BB processing unit 132, and instructs the BB processing unit 132 to broadcast transmit the notification information to the determined distribution area (S58). In this case, the CNT 133 outputs to the BB processing unit 132 the disaster type and the message text which are extracted from the Write-Replace Warning Request message (S57), by including in the communication restriction information or the notification information. By this, the notification information including the communication restriction information is transmitted to the terminal 200.

Next, the base station 100 generates a Write-Replace Warning Response message in response to the Write-Replace Warning Request message (S57), and transmits the generated message to the MME 300 (S63). For example, the above generation and the transmission of the message are performed by the CNT 133 as depicted in FIG. 13.

Through the above series of operation, for example, the terminal 200 can acquire the emergency information such as an earthquake early warning, a tsunami early warning, etc.

### < 6.2 Establishment processing of inter-base station communication>

Next, a description will be given on an operation example of the establishment processing of inter-base station communication and inter-terminal communication. Here, it is assumed that the terminal 200 already receives the communication restriction information, and thereafter, a call between with the base station 100 is already disconnected due to congestion etc.

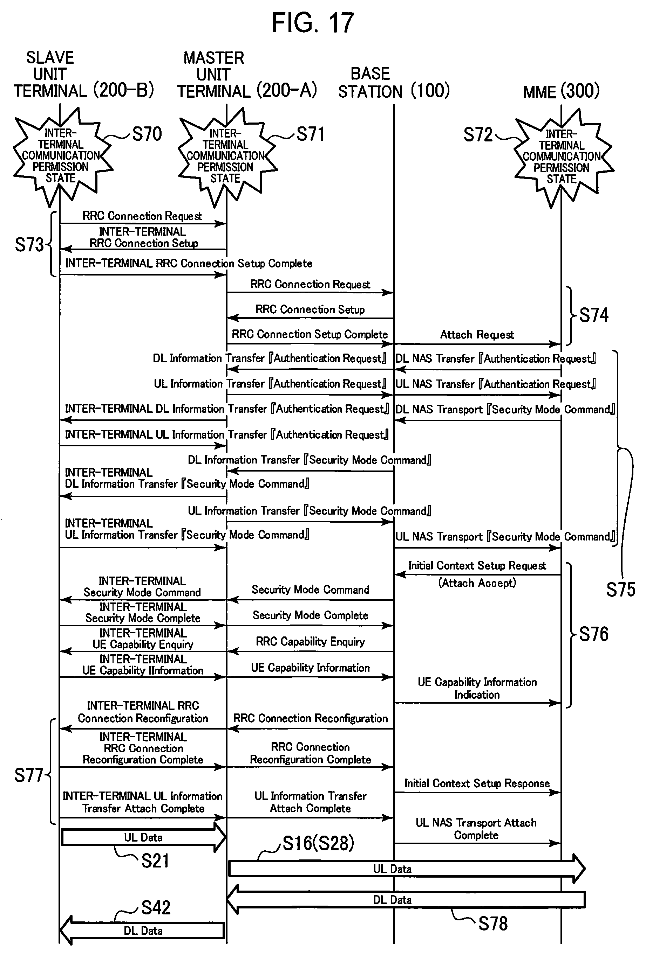

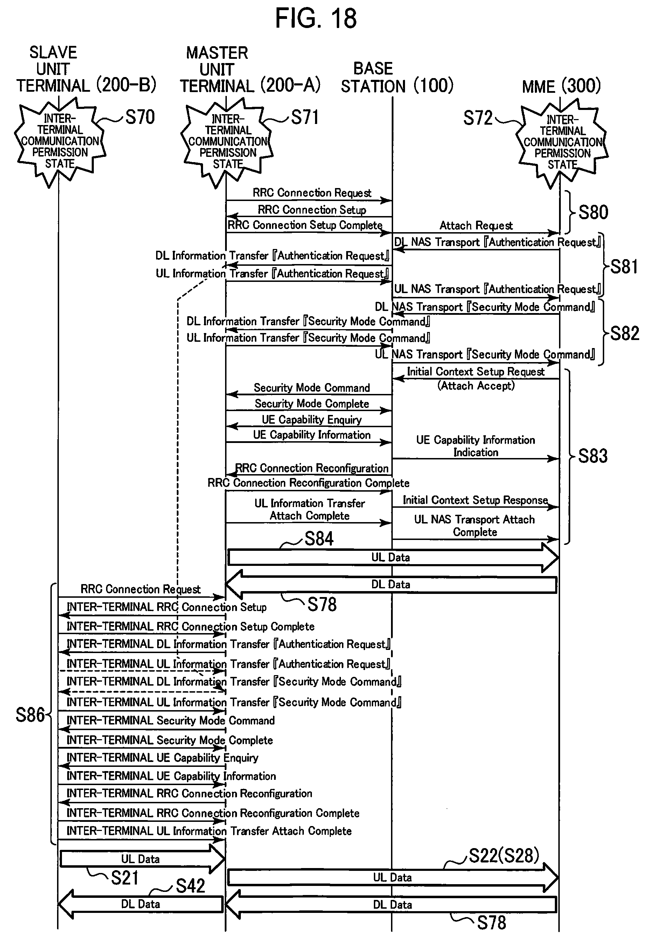

FIG. 17 illustrates an example in which the establishment processing of the inter-base station communication is performed after the establishment processing of the inter-terminal communication is completed. In contrast, FIG. 18 illustrates an example in which the establishment processing of the inter-terminal communication is performed after the establishment processing of the inter-base station communication is completed. For example, FIG. 17 corresponds to FIG. 5 and FIG. 18 corresponds to FIG. 6, respectively.

As depicted in FIG. 17, the terminals 200-A, 200-B and the MME 300 are in an inter-terminal communication permission state by the reception of the communication restriction information etc. (S70-S72).

Next, the terminal 200-A starts the establishment processing of the inter-terminal communication with the terminal 200-B (S73). The opportunity of the connection start processing is, for example, when the terminal 200-B transmits a connection request for the inter-terminal communication, and the terminal 200-B enters the communicable range of the terminal 200-A, and the terminal 200-A receives the connection request from the terminal 200-B. Here, in this stage, because the terminal 200-A is not connected to the base station 100, the terminal 200-A does not act as a master unit terminal yet. Such inter-terminal communication processing is performed by each inter-terminal communication control unit 203 of the terminals 200-A, 200-B as depicted in FIG. 12.

Next, the terminal 200-A performs the establishment processing of inter-base station communication with the base station 100 (S74). In the example of FIG. 17, such an example that the terminal 200-A successfully establishes connection with the base station 100 is illustrated. The terminal 200-A, taking an opportunity that connection with the terminal 200-B is established (S73), performs the establishment processing of the inter-base station communication. Such processing is performed by the MPU 205 as depicted in FIG. 12, when receiving notification from the inter-terminal communication control unit 203 to the effect that the inter-terminal communication is successfully established.

When the terminal 200-A establishes the inter-base station communication, the terminal 200-A becomes a master unit terminal 200-A, for example. Also, because the terminal 200-B does not establish the inter-base station communication with the base station 100 yet, the terminal 200-B becomes a slave unit terminal 200-B.

Meanwhile, the base station 100, on establishing connection with the master unit terminal 200-A, transmits an Attach Request message to the MME 300 (S74). The Attach Request message enables the MME 300 to perform processing such as route setting to the master unit terminal 200-A.

Here, in the connection establishment processing between with the base station 100 (S74), the master unit terminal 200-A notifies the base station 100 that the inter-terminal communication is successfully established, for example. Also, the base station 100 transmits to the MME 300 to the effect that the inter-terminal communication is established in the master unit terminal 200-A by including in the Attach Request message. This enables the MME 300 to generate security information to the two terminals, i.e. the master unit terminal 200-A and the slave unit terminal 200-B in authentication processing which will be described later, for example.

Next, the MME 300 performs authentication processing between with the master unit terminal 200-A through the base station 100 (S75). At this time, the MME 300 is configured not to perform authentication processing to the slave unit terminal 200-B. In this case, the master unit terminal 200-A, if receiving an "Authentication Request" message, does not transmit the message concerned to the slave unit terminal 200-B. This enables the prevention of the occurrence of congestion, for example, because a message caused by the authentication processing is not transmitted to the slave unit terminal 200-B. Since an authentication process to the slave unit terminal 200-B is omitted, the "Authentication Request" to be transmitted and received between the master unit terminal 200-A and the slave unit terminal 200-B is omitted in FIG. 17, for example.

I n the above authentication processing, the MME 300 generates a "Security Mode command" message, to transmit toward the master unit terminal 200-A. The MME 300 transmits the security information to the two terminals by including in the message of concern, and transmits the security information to the master unit terminal 200-A.

Such authentication processing is performed among the authentication and security control unit 330, the CNT 133 and the MPU 205, for example.

Next, the MME 300 transmits to the base station 100 a permission message to the Attach Request message, and thereafter, the base station 100 and the slave unit terminal 200-B exchange information related to security (for example, compression information) through the master unit terminal 200-A (S76).

Next, the base station 100 exchanges an RRC Connection Reconfiguration message with the slave unit terminal 200-B through the master unit terminal 200-A (S77). This enables the master unit terminal 200-A and the slave unit terminal 200-B to acquire a variety of types of setting information (for example, PUCCH setting information) which is set by the base station 100, for example.

By the establishment processing of the inter-base station communication and the inter-terminal communication described above, a communication route is established between the base station 100 and the slave unit terminal 200-B through the master unit terminal 200-A, for example.

Thereafter, the slave unit terminal 200-B generates transmission request information (for example, a destination "B") to transmit to the master unit terminal 200-A (S21), and the master unit terminal 200-A transmits storage information which includes the transmission request information of the self-terminal (for example, a destination "A") and the transmission request information of the slave unit terminal 200-B, to the base station 100 (S16 (or S28)). Also, the master unit terminal 200-A receives transfer information from the base station 100, and transmits the transfer information to the slave unit terminal 200-B in which the inter-terminal communication is established (S78, S42).

Next, an operation example depicted in FIG. 18 will be described. In the example depicted in FIG. 18, the master unit terminal 200-A establishes inter-base station communication with the base station 100 (S80-S83). Then, the master unit terminal 200-A transmits the storage information of the self-terminal to the base station 100 (S84) and receives the transfer information from the base station 100 (S78).

Next, the master unit terminal 200-A performs processing for establishing inter-terminal communication with the slave unit terminal 200-B (S86). I n this case also, for example, it may be possible to start the processing by taking an opportunity that the slave unit terminal 200-B enters the communicable range of the master unit terminal 200-A, and the master unit terminal 200-A receives a connection request message (for example, RRC Connection Request message).

The slave unit terminal 200-B, on establishing the inter-terminal communication, transmits transmission request information (S21), and the master unit terminal 200-A transmits the storage information to the base station 100 (S22 (or S28)). Also, the master unit terminal 200-A receives the transfer information from the base station 100 (S78), and transmits the received transfer information to the slave unit terminal 200-B (S42).

### < 6.3 Operation example of uplink communication>

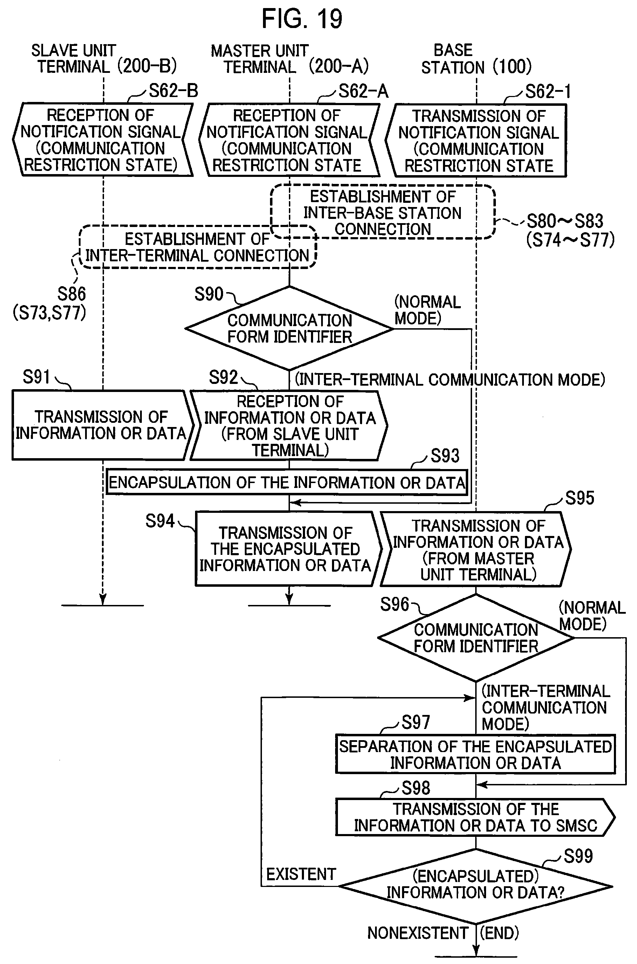

Next, a description will be given on an operation example of uplink communication. FIG. 19 is a sequence diagram illustrating the operation example of the uplink communication. FIG. 19 illustrates an operation example when notification information including the communication restriction information is transmitted from the base station 100 (S62-1, S62-A, S62-B), and after the inter-base station communication and the inter-terminal communication are established (S80-S83, S86 (S73-S77)).

The master unit terminal 200-A extracts the communication restriction information from the notification information received from the base station 100, and discriminates whether or not to shift to an inter-terminal communication mode on the basis of the communication form identifier included in the communication restriction information (S90).

For example, when the communication form identifier indicates that the communication restriction is activated, the master unit terminal 200-A shifts to the inter-terminal communication mode ("inter-terminal communication mode" in S90). On the other hand, when the communication form identifier indicates that the communication restriction is not activated, the master unit terminal 200-A continues the state of a normal mode ("Normal mode" in S90). Such discrimination is performed in the MPU 205 depicted in FIG. 12, and at the shift to the inter-terminal communication mode, notification to that effect is made to the inter-terminal communication control unit 203.

The master unit terminal 200-A, on shifting to the inter-terminal communication mode, receives transmission request information which is transmitted from the slave unit terminal 200-B (S92). Here, there is a description of "information or data" in FIG. 19, in which the transmission request information, the storage information, or the transfer information may be referred to as the "information or data", for example. In this case, the slave unit terminal 200-B performs transmission by including the communication form identifier indicative of the inter-terminal communication in packet data which includes the transmission request information, and also, the master unit terminal 200-A generates the communication form identifier indicative of the inter-terminal communication, for the transmission request information of the self-terminal.

Next, the master unit terminal 200-A encapsulates the transmission request information of the self-station and the transmission request information of the slave unit terminal 200-B (S93), and transmits as storage information (S94).

The base station 100, on receiving the storage information (S95), discriminates whether or not to shift to the inter-terminal communication mode, on the basis of the communication form identifier included in the storage information (S96).

When the communication form identifier indicates inter-terminal communication ("inter-terminal communication mode" in S96), the base station 100 shifts to the inter-terminal communication mode ("inter-terminal communication mode" in S96), and separates the storage information (S97).

For example, on detecting that an identifier indicative of the inter-terminal communication is included in the communication form identifier, the CNT 133 as depicted in FIG. 13 shifts to the inter-terminal communication mode to separate the received storage information. In this case, the CNT 133 separates the packet data of the slave unit terminal 200-B from the packet data of the master unit terminal 200-A, on the basis of data etc. inserted in the header part, for example.

Next, the base station 100 transmits the separated storage information to the SMSC 400 (S98). For example, the CNT 133 as depicted in FIG. 13 transmits the separated packet data to the SMSC 400, and in the SMSC 400, each separated packet data is transmitted to each transmission destination.

Next, if there is no storage information ("Nonexistent" in S99), the base station 100 completes a series of processing, whereas if there is storage information ("Existent" in S99), shifts to S97 to repeat the above-mentioned processing.

On the other hand, when the communication form identifier does not indicate inter-terminal communication ("Normal mode" in S96), the base station 100 transmits the received packet data to the SMSC 400. In this case, for example, the base station 100 transmits the packet data of the master unit terminal 200-A to the SMSC 400. Thereafter, the base station 100 performs the processing of S98 and subsequent thereto.

### < 6.4 Operation example of downlink communication>

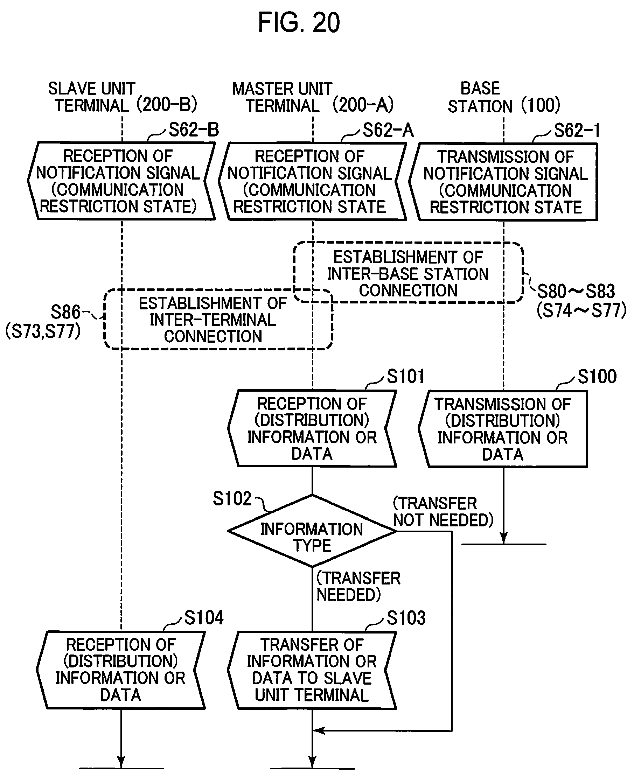

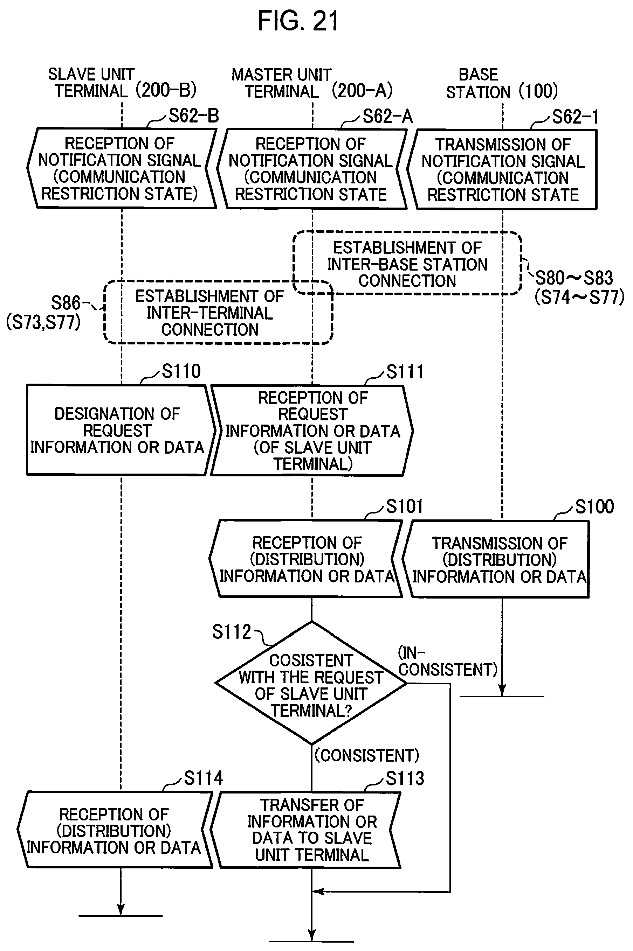

Next, by reference to FIG. 20 and 21, a description will be given on an operation example of downlink communication. Both FIG. 20 and 21 are examples when the master unit terminal 200-A discriminates and transmits transfer information to be transmitted to the slave unit terminal 200-B.

For example, FIG. 20 is an example in which predetermined transfer information is transmitted to the slave unit terminal 200-B, whereas FIG. 21 is an example in which transfer information is transmitted to the slave unit terminal 200-B according to a request from the slave unit terminal 200-B.

As depicted in FIG. 20, the master unit terminal 200-A receives notification information including the communication restriction information (S62-A), and on establishing the inter-base station communication and the inter-terminal communication (S80-S83, S86 (S73-S77)), receives the transfer information transmitted from the base station 100 (S100, S101).

Next, based on an information type, the master unit terminal 200-A discriminates whether or not to transmit the received transfer information to the slave unit terminal 200-B (S102).

For example, in a case when the received transfer information is public information such as earthquake information and railway operation information, the master unit terminal 200-A transmits the transfer information to the slave unit terminal 200-B, whereas in the case of other information, the master unit terminal 200-A can determine not to transmit the transfer information. Since information indicative of the information type is included in the header part of the transfer information, the master unit terminal 200-A can discriminate based on the above information. Alternatively, since the information of a disaster type which is transmitted from the SMSC 400 is included in the communication restriction information (S62-A), the master unit terminal 200-A can discriminate whether or not to transmit to the slave unit terminal 200-B on the basis of the disaster type information etc. Such discrimination is performed, for example, in the CNT 133 depicted in FIG. 13, in which the discrimination can be made by whether or not the identifier of information, which is stored in a memory etc., to be transmitted to the slave unit terminal 200-B is coincident with the identifier of disaster information included in the transfer information and the communication restriction information.

The master unit terminal 200-A, on discriminating that the received transfer information is information to be transmitted to the slave unit terminal 200-B ("Transfer needed" in S102), transmits the received transfer information to the slave unit terminal 200-B (S103). For example, it may also be possible for the master unit terminal 200-A to transmit a part of the received transfer information to the slave unit terminal 200-B without transmission of the remaining part.

Then, the master unit terminal 200-A completes a series of processing.

On the other hand, when the master unit terminal 200-A discriminates that the received transfer information is not information to be transmitted to the slave unit terminal 200-B ("Transfer not needed" in S102), the master unit terminal 200-A completes processing without transmitting the received transfer information to the slave unit terminal 200-B.

Here, in the example of FIG. 20, the master unit terminal 200-A discriminates transfer information to be transmitted to the slave unit terminal 200-B (S102). However, the master unit terminal 200-A may transmit all of the received transfer information to the slave unit terminal 200-B.

Next, a description will be given on an operation example of FIG. 21. When the master unit terminal 200-A establishes inter-base station communication and inter-terminal communication (S80-S83, S86 (S73-S77)), the slave unit terminal 200-B transmits designation information to the master unit terminal 200-A (S110). The designation information signifies information indicative of the type of transfer information of which reception from the master unit terminal 200-A is requested by the slave unit terminal 200-B. For example, there is a case that a user operates the slave unit terminal 200-B to request the reception of public information, such as railway operation information and meteorological information, for many times. In such a case, the slave unit terminal 200-B transmits, to the master unit terminal 200-A, information indicative of public information as the designation information, so that can receive the designated public information from the master unit terminal 200-A.

The transmission of the designation information from the slave unit terminal 200-B is performed in the following manner, for example. Namely, the MPU 205 as depicted in FIG. 12 detects transfer information of which reception is requested, on the basis of character information input to the display unit 206 and a URL (Uniform Resource Locator: uniform resource location identifier) to which an access is requested. The MPU 250 then generates designation information, indicative of the type of the detected transfer information, to transmit to the master unit terminal 200-A through the inter-terminal communication control unit 203, for example.

The master unit terminal 200-A receives the designation information (S111), and on receiving transfer information from the base station 100 (S101), decides whether or not the transfer information is coincident with the designation information (S112). The decision is made in the inter-terminal communication control unit 203 or the MPU 205, as depicted in FIG. 12, for example.

When the transfer information is coincident with the designation information ("Consistent" in S112), the master unit terminal 200-A transmits the received transfer information to the slave unit terminal 200-B (S113), whereas when not coincident ("Inconsistent" in S112), completes processing without transmitting the received transfer information to the slave unit terminal 200-B. In this case, for example, it may also be possible for the master unit terminal 200-A to transmit to the slave unit terminal 200-B partial transfer information which is coincident with the designation information, instead of all of the received transfer information.

As the designation information, for example, it may be possible to apply the transmission date/time of the transfer information, a regional number, etc., other than the information indicative of the transfer information type. For example, the transmission date/time and the regional number may be included in the transfer information, so that the MPU 205 depicted in FIG. 12 selects transfer information which is coincident with the designation information or within a certain allowable range, so as to transmit to the slave unit terminal 200-B.

### < 6.5 State transition of terminal>

Next, a description will be given on the state transition of the terminal 200. The description on each state to which the terminal 200 shifts may cause easy understanding of the operation of the terminal 200.

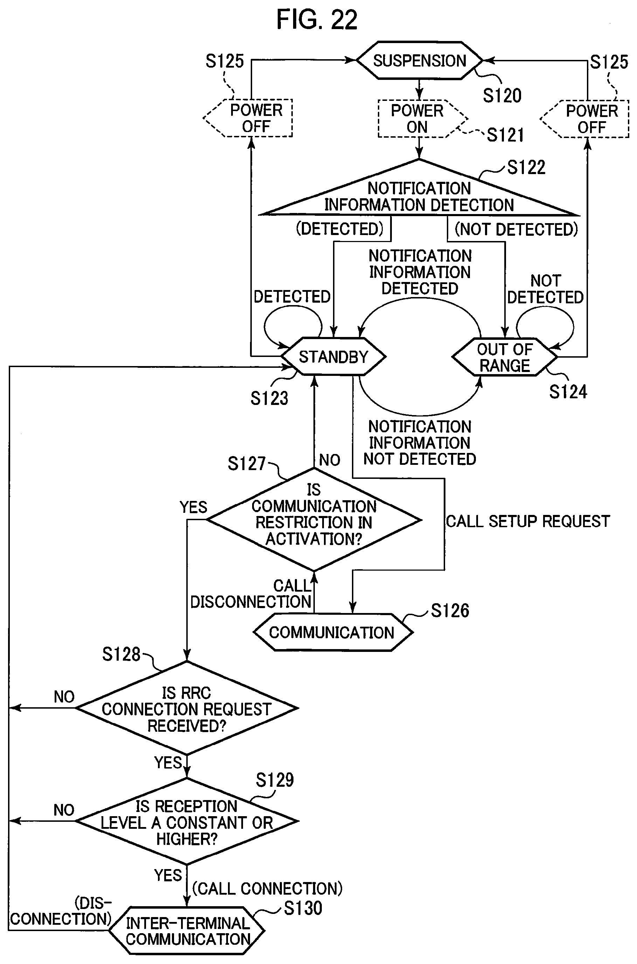

FIG. 22 is a diagram illustrating an example of the state transition in the terminal 200. A description will be started from a suspension state (S120) in which the power of the terminal 200 is switched off.

When the power is switched on when the terminal 200 is in the suspension state (S121), the terminal 200 discriminates the presence or absence of notification information detection (S122).

When failing to detect notification information ("Not detected" in S122), the terminal 200 shifts to an out-of-range state (S124), whereas when detecting notification information ("Detected" in S122), the terminal 200 shifts to a standby state (S123).

On detecting the notification information, the terminal 200 in the out-of-range state shifts to the standby state (S123), whereas when failing to detect, the terminal 200 continues to be in the out-of-range state (S124). Meanwhile, with regard to a terminal 200 in the standby state also, the terminal 200 shifts to the out-of-range state (S124) if the state of being unable to detect notification information continues for a certain period.

The terminal 200 in the standby state (S123) or the out-of-range state (S124) shifts to the suspension state (S120) when power is cut off (S125).

Meanwhile, the terminal 200 in the standby state shifts to a communication state (S126) when transmitting a call setup request to the base station 100 initiated by a user operation etc., or receiving a call setup request from the base station 100. The terminal 200 after shifting to the communication state (S126) performs processing of S80-S83 depicted in FIG. 18, etc.

The terminal 200 in the communication state, on detecting a call disconnection between with the base station 100, discriminates whether or not communication restriction is in activation (S127).

For example, the MPU 205 depicted in FIG. 12 detects the disconnection of call communication, when continuing to fail to detect a signal such as a reference signal from the base station 100 for a certain period, or when a signal level continues to be a constant or lower for a certain period if the signal can be received. Then, the MPU 205 extracts the communication form identifier from the notification information (S122), to discriminate whether or not the extracted communication form identifier indicates that the communication restriction is activated.

On discriminating that the communication restriction is not in activation (NO in S127), the terminal 200 shifts to the standby state (S123).

On the other hand, on discriminating that the communication restriction is in activation (YES in S127), the terminal 200 discriminates whether or not an RRC Connection Request message is received (S128).

When not receiving the RRC Connection Request message (NO in S128), the terminal 200 shifts to the standby state (S123).

On the other hand, on receiving the RRC Connection Request message (YES in S128), the terminal 200 discriminates whether or not the reception level is a constant or higher (S129). For example, the MPU 205 as depicted in FIG. 12 discriminates whether or not a RRC Connection Request message is received, and detects the reception level of the message concerned, to thereby discriminate the present processing (S129).

When the reception level is lower than the constant (NO in S129), the terminal 200 shifts to the standby state (S123).

On the other hand, when the reception level is the constant or higher (YES in S129), the terminal 200 shifts to an inter-terminal communication state (S130).

For example, the terminal 200 performs inter-terminal communication with another terminal which transmits the RRC Connection Request message of which reception level is the constant or higher. When the terminal 200 receives a plurality of RRC Connection Request messages, the terminal 200 performs the inter-terminal communication with the other terminal which transmits the message of the highest reception level.

On becoming the inter-terminal communication state, the terminal 200 transmits and receives, for example, transmission request information between with the other terminal (for example, FIG. 3), or when receiving, in the communication state (S126), transfer information from the base station 100, the terminal 200 transmits the transfer information to the other terminal (for example, FIG. 7).

On detecting, in the inter-terminal communication state, the disconnection of a call related to the inter-terminal communication, the terminal 200 shifts to the standby state (S123). In this case also, similar to S126, the MPU 205 as depicted in FIG. 12 discriminates the call disconnection on the basis of a reception signal level of the slave unit terminal 200-B, for example.

### <6.6 Communication method of terminal and example of radio resource allocation>

Next, there will be described examples of the communication methods of the inter-terminal communication and the inter-base station communication and an example of radio resource allocation.

As described above, in the present mobile communication system 10, different communication methods are adopted in between the inter-terminal communication and the inter-base station communication. For example, the inter-terminal communication uses the LTE-TDD method whereas the inter-base station communication uses the LTE-FDD method. This enables the terminal 200 to share information with another terminal in the inter-terminal communication, if the inter-base station communication is restricted.

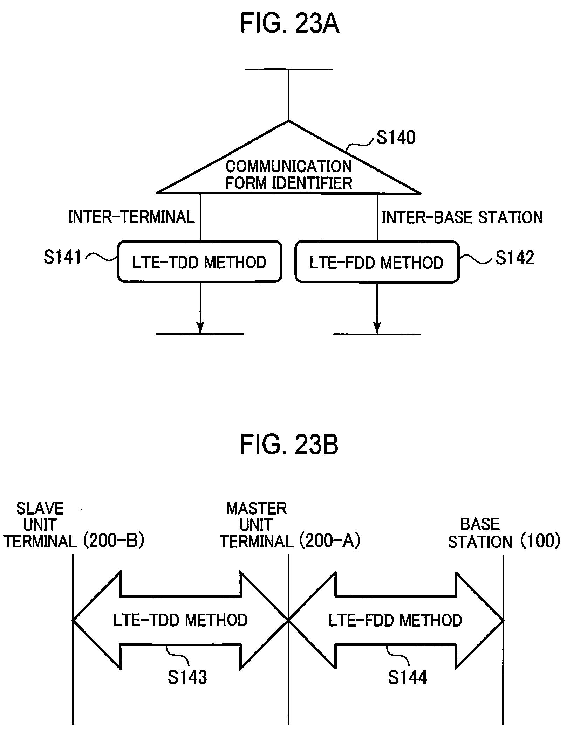

FIG. 23A is a flowchart illustrating an operation example of the communication methods. The base station 100 selects either the inter-terminal communication or the inter-base station communication on the basis of the communication form identifier (S140), to select the LTE-TDD method in the case of the inter-terminal communication (S141), whereas select the LTE-FDD method in the case of the inter-base station communication (S142).

For example, the base station 100 selects the LTE-TDD method if the communication form identifier transmitted from the master unit terminal 200-A indicates the inter-terminal communication, whereas selects the LTE-FDD method if otherwise.

In the above example, for example, when a common carrier operates the mobile communication system 10 using the LTE-FDD method, the LTE-TDD method different therefrom is applied to the inter-terminal communication.

Then, as depicted in FIG. 23B, the master unit terminal 200-A communicates with the slave unit terminal 200-B using the LTE-TDD method, whereas the master unit terminal 200-A communicates with the base station 100 using the LTE-FDD method (S143, S144).

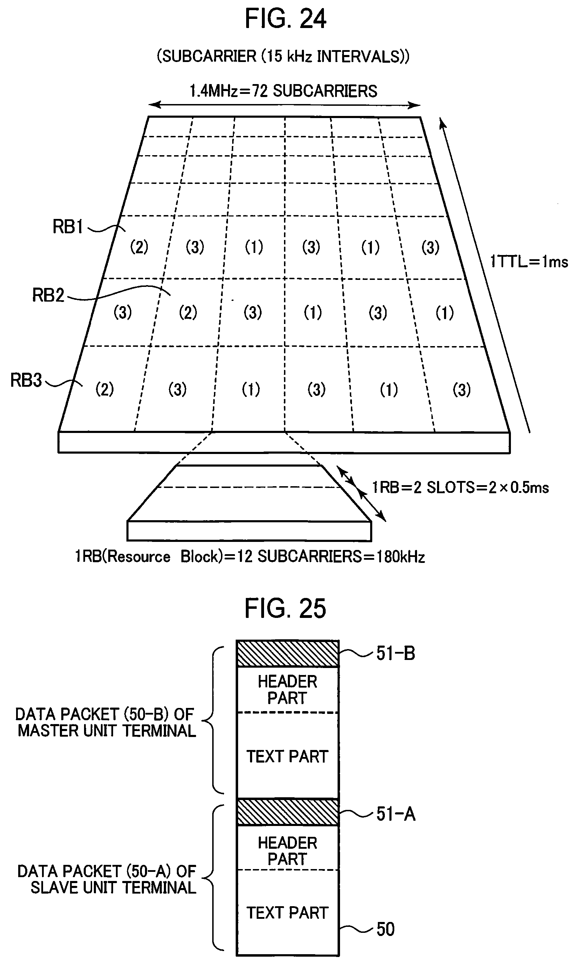

FIG. 24 is a diagram illustrating an example of radio resource allocation. In the radio resource as depicted in FIG. 24, the longitudinal direction represents the time, whereas the lateral direction represents the frequency, and a region enclosed with one dotted frame represents 1 RB (Resource Block).

Also, in FIG. 24, "(1)" represents a resource block allocated for the base station 100 to perform inter-base station communication with the master unit terminal 200-A, and "(3)" represents a resource block allocated for the base station 100 to perform inter-base station communication with another terminal than the master unit terminal 200-A.

Further, "(2)" represents a resource block to be used for inter-terminal communication. When an attention is directed to the resource block of "(2)", resource blocks RB1, RB3 including the same subcarrier are used at different timing, and also, a resource block RB2 is used at different timing from the other resource blocks RB1, RB3. As such, each radio resource to be used in the inter-terminal communication becomes the TDD method.

Here, in the inter-terminal communication, it may be possible to determine which radio resource is used among the radio resources for LTE-TDD (or which of the resource blocks RB1-RB3) through a negotiation between terminals, for example, or by scheduling in the base station 100.

The radio resource allocation as described above is performed in the MPU 205 depicted in FIG. 12, for example.

Next, a description will be given on an example of storage information which is transmitted from the master unit terminal 200-A to the base station 100. FIG. 25 illustrates an example of encapsulated storage information, which is identical to the storage information as depicted in FIG. 6B, for example. The storage information is of a packet data format, for example, and the communication form identifier is inserted in a part of the header part, as described earlier. Also, for example, the packet data format depicted in FIG. 25 is used for transfer information to be transmitted from the master unit terminal 200-A to the slave unit terminal 200-B, also as described earlier.

When the communication form identifier is included in the storage information, the communication form identifier is generated in the master unit terminal 200-A or the slave unit terminal 200-B. In this case, the communication form identifier indicates the existence or nonexistence of the inter-terminal communication, for example, and based on the communication form identifier, the MME 300 etc. can discriminate whether or not received storage information is information acquired through the inter-terminal communication.

Also, when the communication form identifier is included in the transfer information, the communication form identifier is generated in the master unit terminal 200-A, for example. In this case, the communication form identifier is a different identifier dependent on the transfer information. Therefore, for example, the terminal 200 can discriminate whether or not the identical transfer information is received on the basis of the communication form identifier which is received from another terminal (for example, S34 in FIG. 8), so that can prevent the "resonance phenomenon".

Further, there is a case that the communication form identifier is included in the communication restriction information. In this case, the communication form identifier is generated in the SMSC 400, for example, and represents the existence or nonexistence of the communication restriction state. This enables the terminal 200 to shift to the inter-terminal communication mode to transmit transfer information to the slave unit terminal 200-B and receive transmission request information which is transmitted from another terminal 200-B, for example.

### <6.7 Operation flow of terminal>

Next, a description will be given on an operation example of the terminal 200. With regard to the operation example of the terminal 200, a part thereof has been described so far, and therefore, the part thereof will be described briefly.

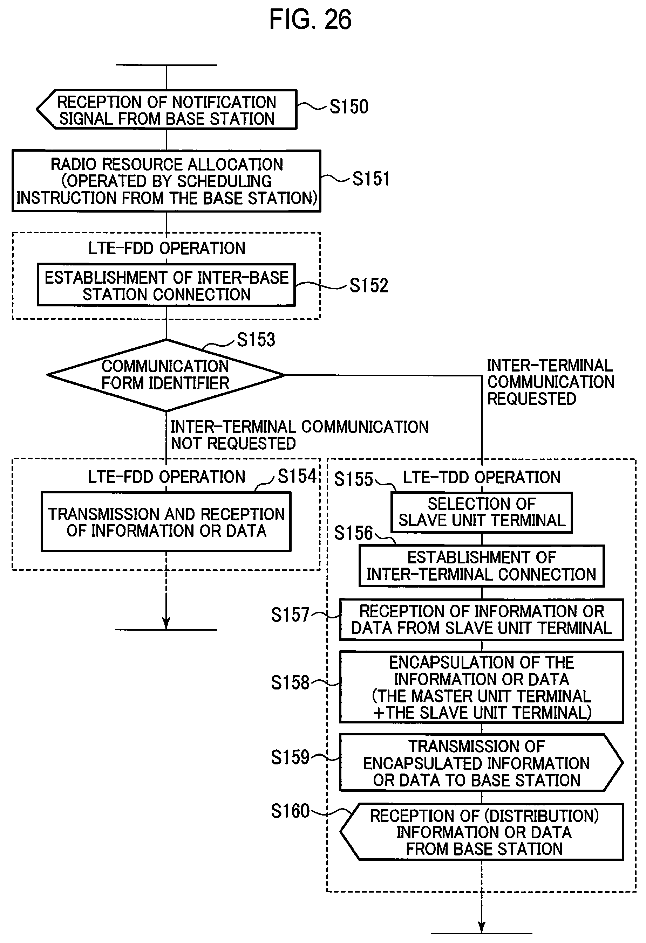

FIG. 26 is a flowchart illustrating the operation example of the terminal 200. The terminal 200 receives notification information from the base station 100 (S150). Also, the terminal 200 receives a control signal etc. transmitted from the base station 100, so as to receive radio resource allocation scheduled in the base station 100 (S151).

Next, the terminal 200 performs the establishment processing of the inter-base station communication with the base station 100 (S152). For example, the terminal 200 performs processing of S80-S83 in FIG. 18.

Next, the terminal 200 extracts the communication form identifier from the notification information (S150), to discriminate the existence or nonexistence of a request for inter-terminal communication on the basis of the communication form identifier (S153).

On discriminating that there is no request for inter-terminal communication ("Inter-terminal communication not requested" in S153), the terminal 200 transmits storage information (S154). For example, when the communication form identifier indicates that no communication restriction exists, the terminal 200 discriminates that there is no request for inter-terminal communication. I n this case, the terminal 200 transmits, as the storage information, the transmission request information of the self-station using the LTE-FDD method, for example.

On the other hand, on discriminating there is a request for inter-terminal communication ("Inter-terminal communication requested" in S153), the terminal 200 selects a slave unit terminal 200-B (S155). For example, when the communication form identifier indicates that the communication restriction exists, the terminal 200 discriminates that there is a request for inter-terminal communication. In this case, the terminal 200 selects a slave unit terminal 200-B on the basis of a reception signal level etc. (for example, S128 and S129 in FIG. 22).

Next, the terminal 200 performs the establishment processing of the inter-terminal communication (S156), to receive transmission request information which is transmitted from another terminal 200-B (S157). I n this case, the terminal 200 receives the transmission request information using the LTE-TDD method.

Then, on establishing the inter-base station communication with the base station 100, the terminal 200 generates storage information in which transmission request information, received from the slave unit terminal 200-B, and transmission request information of the self-station are encapsulated (S158), to transmit to the base station 100 (S159).

Further, the terminal 200 receives transfer information from the base station 100 (S160), to transmit to the slave unit terminal 200-B. I n this case also, the terminal 200 transmits the transfer information to the slave unit terminal 200-B using the LTE-TDD method.

### <6.8 Operation flow of MME>

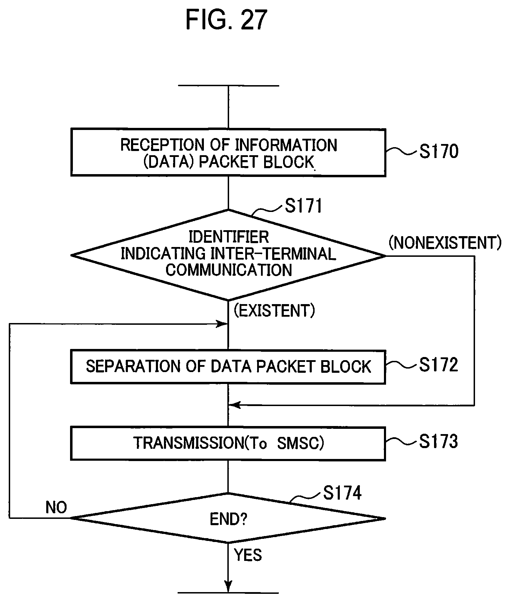

Next, a description will be given on an operation example of the MME 300. FIG. 27 is a flowchart illustrating an operation example of the MME 300. The operation example depicted in FIG. 27 illustrates an operation example in uplink communication.

The MME 300 receives packet data which includes storage information transmitted from the master unit terminal 200-A, through the base station 100 (S170).

Next, the MME 300 extracts the communication form identifier from the packet data, and based on the extracted communication form identifier, discriminates whether or not an identifier indicative of the inter-terminal communication is included in the packet data (S171). For example, the information encapsulation communication control unit 340 as depicted in FIG. 14 performs the present processing (S171).

On discriminating that the identifier indicative of the inter-terminal communication is included ("Existent" in S171), the MME 300 separates the storage information from the packet data (S172). For example, when the communication form identifier indicates that the inter-terminal communication is existent, the information encapsulation communication control unit 340 as depicted in FIG. 14 separates the received information on the basis of the storage information generated in each terminal 200-A, 200-B.

Next, the MME 300 transmits the separated storage information to the SMSC 400 (S173). For example, the information encapsulation communication control unit 340 as depicted in FIG. 14 transmits the separated storage information or the received storage information to the SMSC 400 (S173). The storage information which is transmitted to the SMSC 400 is transmitted to each transmission destination.

Then, the MME 300 discriminates whether or not the processing is to be completed, and when to be completed, completes a series of processing (YES in S174), whereas when not to be completed, shifts to S172 to repeat the above-mentioned processing. For example, the information encapsulation communication control unit 340 as depicted in FIG. 14 performs the discrimination on the basis of the existence or nonexistence of the storage information retained in a memory etc.

On the other hand, on discriminating that an identifier indicative of inter-terminal communication is not included in the packet data ("Nonexistent" in S171), the MME 300 transmits the received storage information to the SMSC 400 without separating the packet data (S173).

### <6.9 Operation flow of overall network side>

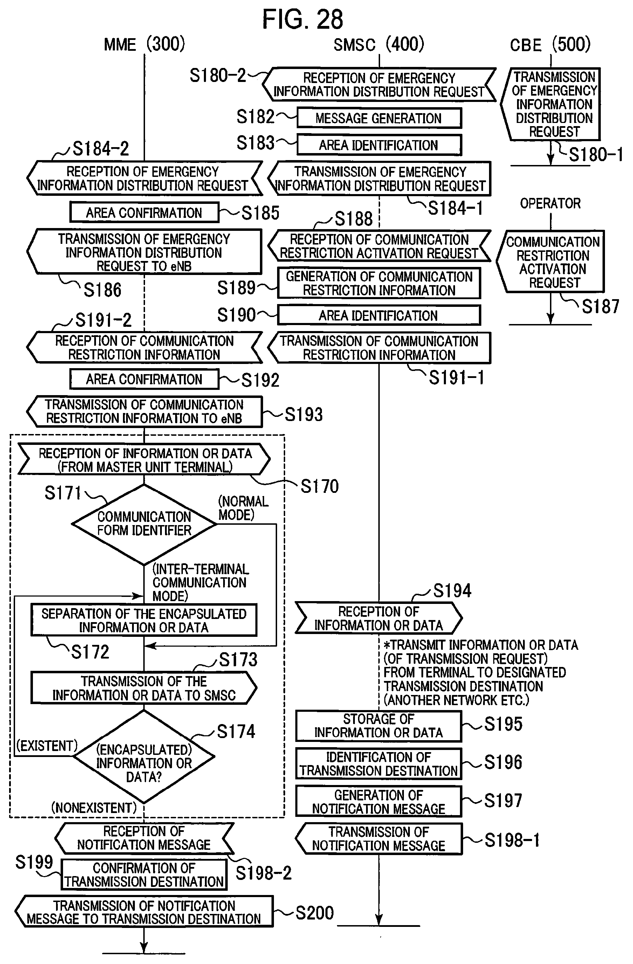

Next, each operation example of the MME 300, the SMSC 400 and the CBE 500 will be described. FIG. 28 is a flowchart illustrating an operation example. In FIG. 28, the flowchart of the MME 300 depicted in FIG. 27 is depicted in a dotted frame. Also, in the processing depicted in FIG. 28, a part thereof is duplicated with FIG. 16, for example.

On detection of an emergency, the CBE 500 transmits an emergency information distribution request (S180-1).

The SMSC 400, on receiving the emergency information distribution request (S180-2), generates a message text to be distributed to the terminal 200 (S182), identifies a distribution area (S183), and transmits the emergency information distribution request to the MME 300 (S184-1).

Also, the SMSC 400 receives a communication restriction activation request caused by an operation by an operator on the SMSC 400 or an operation on another apparatus (S187, S188). On receiving the communication restriction activation request, the SMSC 400 generates communication restriction information (S189). The present example represents such an example that the communication restriction information is generated at the SMSC 400 caused by the communication restriction activation request by an operator.

On generating the communication restriction information (S189), the SMSC 400 identifies an area to which the communication restriction information is to be distributed (S190), and transmits the communication restriction information to an MME 300 in the identified area (S191-1). Processing from S188 to S191-1 is performed in the communication restriction information generation and distribution control unit 440 depicted in FIG. 15, for example. The transmission area of the communication restriction information and the transmission area of emergency information may be the same, for example.

Meanwhile, the MME 300, on receiving the emergency information distribution request transmitted from the SMSC400 (S184-2) and confirming the area to which the emergency information is to be distributed (S185), transmits an emergency information distribution request to each base station 100 located in the confirmed area (S186).

Also, the MME 300 receives the communication restriction information transmitted from the SMSC 400 (S191-2), confirms the area to which the communication restriction information is to be transmitted (S192), to transmit the communication restriction information to the base station 100 located in the confirmed area (S193).

Thereafter, the MME 300 performs processing from S170 to S174.

Meanwhile, the SMSC 400, after transmitting the communication restriction information to the MME 400, receives from the MME 300 separated storage information, to transmit the separated storage information to a transmission destination (S194).

Then, the SMSC 400, on receiving from the upper-level apparatus transfer information to be transmitted to the terminal 200, stores the transfer information (S195), identifies the MME 300 and the base station 100 which are transmission destinations of the transfer information (S196), and further, generates and transmits a notification message to the effect that the transfer information is received (S197, S198-1).

The MME 300, on receiving the notification message (S198-2), confirms the transmission destination (S199), to transmit the notification message to the base station 100 which comes to the confirmed transmission destination (S200).

Meanwhile, the base station 100, by the reception of the notification message, for example (S198-2), transmits a Paging signal to a terminal 200 which is to be the transmission destination and so on, to establish the inter-base station communication. Then, the base station 100 transmits to the master unit terminal 200-A the transfer information received from the MME 300.

### [Other embodiments]

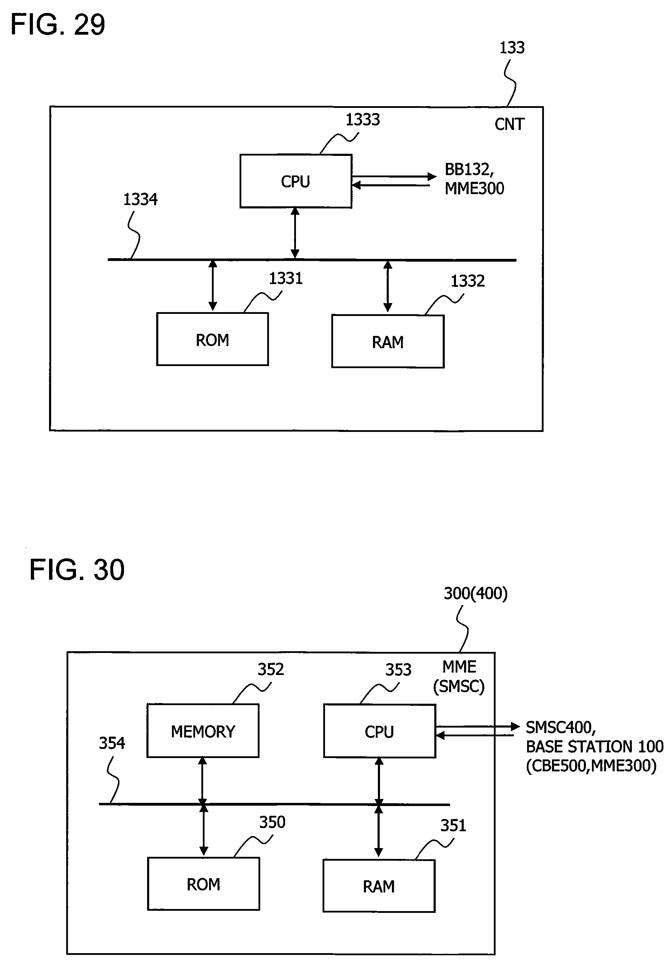

Next, other embodiments will be described. In FIG. 13, the configuration example of the base station 100 has been described. The CNT 133 in the base station 100 may be of a hardware configuration as depicted in FIG. 29, for example.

The CNT 133 includes a ROM (Read Only Memory) 1231, a RAM (Random Access Memory) 1332 and a CPU (Central Processing Unit) 1333, which are interconnected through an internal bus 1334.

The CPU 1333 reads out a program stored in the ROM 1331, to load on the RAM 1332 and appropriately execute the loaded program, so that can execute a function as the CNT 133. The CPU 1333 corresponds to the CNT 133 in the second embodiment, for example.

FIG. 30 is a diagram illustrating a hardware configuration example of the MME 300. The MME 300 includes a ROM 350, a RAM 351, a memory 352 and a CPU 353, which are interconnected through an internal bus 354.

The CPU 353 reads out each program stored in the ROM 350, to load on the RAM 351 and appropriately execute the loaded program, so that can execute each function of the connection and bearer control unit 310, the movement and INF control unit 320, the authentication and security control unit 330 and the information encapsulation communication control unit 340. Accordingly, the CPU 353 corresponds to the connection and bearer control unit 310, the movement and INF control unit 320, the authentication and security control unit 330 and the information encapsulation communication control unit 340 in the second embodiment as depicted in FIG. 14, for example.

Further, FIG. 30 also illustrates a hardware configuration example of the SMSC 400. A CPU 353 executes each program stored in a ROM 350, so that can execute each function of the SMS generation and distribution control unit 410, the message reception, storage, and retransmission control unit 420, the distribution area identification and INF control unit 430 and the communication restriction information generation and distribution control unit 440 in the second embodiment as depicted in FIG. 15, for example. Accordingly, the CPU 353 corresponds to the SMS generation and distribution control unit 410, the message reception, storage, and retransmission control unit 420, the distribution area identification and INF control unit 430 and the communication restriction information generation and distribution control unit 440 in the second embodiment depicted in FIG. 15, for example.

Additionally, in place of the CPU 353, an FPGA (Field Programmable Gate Array) and an MPU may be applicable.

### REFERENCE SIGNS LIST

10: Mobile communication system
20: Network system
100: Base station apparatus (Base station)
110: RF unit
130: BB unit
133: CNT
200 (200-1, 200-2, 200-A to 200-D, 200-X, 200-Y): Terminal apparatus (Terminal)
203: Inter-terminal communication control unit
204: Memory
205: MPU
209: Antenna
300: MME
310: Connection and bearer control unit
340: Information encapsulation communication control unit
400: SMSC
440: Communication restriction information generation and distribution control unit

## Claims

1. A mobile communication system comprising:
a base station apparatus; and
a first and second terminal apparatuses configured to perform radio communication with the base station apparatus, wherein
the first terminal apparatus includes:
a first inter-terminal communication control unit configured to transmit and receive a data to and from the second terminal apparatus when the first terminal apparatus establishes radio connection with the second terminal apparatus without establishing radio connection with the base station apparatus, and
the second terminal apparatus includes:
a memory;
a second inter-terminal communication control unit configured to receive the data transmitted from the first terminal apparatus and store the data in the memory, and transmit a data transmitted from the base station apparatus and stored in the memory to the first terminal apparatus, when the second terminal apparatus establishes radio connection with the first terminal apparatus; and
a control unit configured to transmit to the base station apparatus the data transmitted from the first terminal apparatus and stored in the memory and a data generated by the second terminal apparatus, and to receive the data transmitted from the base station apparatus and store in the memory, when the second terminal apparatus establishes radio connection with the base station apparatus.

2. The mobile communication system according to claim 1, wherein
the first inter-terminal communication control unit is configured to transmit to the second terminal apparatus a first communication form identifier indicating radio communication with the second terminal apparatus, and
the second inter-terminal communication control unit is configured to transmit to the base station apparatus the first communication form and a second communication form indicating radio communication with the first terminal apparatus.

3. The mobile communication system according to claim 1, wherein
the second inter-terminal communication control unit is configured to encapsulate the data stored in the memory and transmitted from the first terminal apparatus and the data generated by the second terminal apparatus, and transmit the encapsulated data to the base station apparatus.

4. The mobile communication system according to claim 1, wherein
the second inter-terminal communication control unit is configured to transmit a part of the data stored in the memory and transmitted from the base station apparatus to the first terminal apparatus.

5. The mobile communication system according to claim 1, wherein
the second inter-terminal communication control unit is configured to determine whether or not to transmit the data to the first terminal apparatus based on a type of the data stored in the memory and transmitted from the base station apparatus.

6. The mobile communication system according to claim 1, wherein
the first inter-terminal communication control unit is configured to transmit designate information indicating a type of the data transmitted from the second terminal apparatus, and
the second inter-terminal communication control unit is configured to transmit the data coincident with the designate information to the first terminal apparatus.

7. The mobile communication system according to claim 4, wherein
the second inter-terminal communication control unit is configured to transmit the data to the first terminal apparatus, when the data stored in the memory and transmitted from the base station apparatus is a data of public information.

8. The mobile communication system according to claim 1, wherein
the second inter-terminal communication control unit is configured to transmit to the first terminal apparatus a communication form identifier indicating an identification different from each the data transmitting to the first terminal apparatus.

9. The mobile communication system according to claim 8, wherein
the first inter-terminal communication control unit is configured to accept the data received from the second terminal apparatus or not to accept the data received from the second terminal apparatus based on the received communication form identifier, on receiving the communication form identifier received from the second terminal apparatus.

10. The mobile communication system according to claim 9, wherein
the first inter-terminal communication control unit is configured not to accept the received data when the received communication form identifier is coincident with a communication form identifier according to the data stored in the memory and transmitted from the second terminal apparatus, and to accept the received data when the received communication form identifier is not coincident.

11. The mobile communication system according to claim 1, wherein
the control unit is configured not to transmit to the first terminal apparatus a message with respect to an authentication request.

12. The mobile communication system according to claim 1, wherein
the first and second inter-terminal communication control units establish radio connection with the second and first terminal apparatus, on receiving communication restriction information including emergency information indicating occurrence of an emergency from the base station apparatus.

13. The mobile communication system according to claim 12, wherein
the control unit is configured to encapsulate the data transmitted from the first terminal apparatus and stored in the memory and the data generated by the terminal apparatus and transmit to the base station apparatus when a communication form identification included in the communication restriction information is an identification indicating activation of communication restriction, and to transmit the data generated by the terminal apparatus to the base station apparatus when the communication form identification is not the identification indicating activation of communication restriction.

14. The mobile communication system according to claim 12, further comprising a controller, wherein
the controller is configured to separate the encapsulated data received from the second terminal apparatus into the data transmitted from the first terminal apparatus and the data generated by the second terminal apparatus and transmit to an upper apparatus, when the communication form identifier included in the communication restriction information transmitted to the second terminal apparatus is the identifier indicating activation of communication restriction, and to transmit the data generated by the second terminal apparatus to the upper apparatus, when the communication form identifier is not the identifier indicating activation of the communication restriction.

15. The mobile communication system according to claim 1, wherein
the control unit is configured to perform radio communication by a communication method different from first radio communication with the first terminal apparatus and second radio communication with the base station apparatus.

16. The mobile communication system according to claim 15, wherein
the control unit is configured to perform radio communication by time division duplex method to the first radio communication and by frequency division duplex method to the second radio communication.

17. A communication method in a mobile communication system including a base station apparatus and a first and second terminal apparatuses performing radio communication with the base station, the method comprising:
transmitting and receiving a data to and from the second terminal apparatus when the first terminal apparatus establishes radio connection with the second terminal apparatus without establishing radio connection with the base station apparatus, by the first terminal apparatus; and
receiving the data transmitted from the first terminal apparatus, storing the data in the memory, and transmitting a data transmitted from the base station apparatus and stored in the memory to the first terminal apparatus, when the second terminal apparatus establishes radio connection with the first terminal apparatus, by the second terminal apparatus, and transmitting to the base station apparatus the data transmitted from the first terminal apparatus and stored in the memory and a data generated by the second terminal apparatus, receiving the data transmitted from the base station apparatus, and storing in the memory, when the second terminal apparatus establishes radio connection with the base station apparatus, by the second terminal apparatus.

18. A terminal apparatus for performing radio communication with a base station apparatus and performing radio communication with another terminal apparatus, the terminal apparatus comprising:
a memory;
an inter-terminal communication control unit configured to receive a data transmitted from the other terminal apparatus, store in the memory, and transmit a data transmitted from the base station apparatus and stored in the memory to the other terminal apparatus, when the terminal apparatus establishes radio connection with the other terminal apparatus; and
a control unit configured to transmit to the base station apparatus the data transmitted from the other terminal apparatus and stored in the memory and a data generated by the terminal apparatus, when the terminal apparatus establishes radio connection with the base station apparatus.
